# EUROPÄISCHE PATENTSCHRIFT

(11) **EP 3 483 003 B1**
(45) Veröffentlichungstag und Bekanntmachung des Hinweises auf die Patenterteilung: **19.06.2024**
(21) Anmeldenummer: 17201155.3
(22) Anmeldetag: 10.11.2017
(51) Int. Cl.: B60P 1/64, B66C 19/00, B66F 9/00

(54) **TRANSPORTVORRICHTUNG**
TRANSPORT DEVICE
DISPOSITIF DE TRANSPORT

(43) Veröffentlichungstag der Anmeldung: 15.05.2019
(73) Patentinhaber: H.P. Beck & Söhne AG, 3424 Oberösch (CH)
(72) Erfinder: BECK, Markus, 3400 Burgdorf (CH)
(74) Vertreter: Keller Schneider Patent- und Markenanwälte AG

(56) Entgegenhaltungen:
- DE-A1- 2 520 645
- DE-A1- 19 605 710
- DE-B- 1 292 074
- US-A- 3 045 848

## Beschreibung

### Technisches Gebiet

Die Erfindung betrifft eine Transportvorrichtung zum Transport von Transportgut, insbesondere leeren oder beladenen Transportpaletten wie Europoolpaletten. Die Transportvorrichtung umfasst eine Trageeinrichtung, welche wenigstens zwei Räder umfasst, auf welchen die Transportvorrichtung von einem Ort an einen anderen Ort bewegt werden kann. Weiter umfasst die Transportvorrichtung eine Greifeinrichtung zum Ergreifen des Transportguts, wobei die Greifeinrichtung eine Freigabekonfiguration und eine Greifkonfiguration aufweist und zum Ergreifen des Transportguts von der Freigabekonfiguration in die Greifkonfiguration verstellbar ist. Die Greifeinrichtung umfasst zwei beabstandete, sich gegenüberliegende Greifeinheiten zum Ergreifen des Transportguts, wobei sich die beiden Greifeinheiten in der Freigabekonfiguration der Greifeinrichtung in einer Freigabestellung und in der Greifkonfiguration der Greifeinrichtung in einer Greifstellung befinden, wobei die beiden Greifeinheiten zum Verstellen der Greifeinrichtung von der Freigabekonfiguration in die Greifkonfiguration beim Ergreifen des Transportguts relativ zueinander von der Freigabestellung in die Greifstellung bewegbar sind. Weiter umfasst die Transportvorrichtung eine an der Trageeinrichtung angeordnete Hebeeinrichtung zum Anheben und Absenken der Greifeinrichtung relativ zur Trageeinrichtung. Die Hebeeinrichtung weist eine Ladekonfiguration und eine Transportkonfiguration auf, wobei sich die Greifeinrichtung in der Ladekonfiguration der Hebeeinrichtung in einer Ladeposition zum Ergreifen des Transportguts durch verstellen der Greifeinrichtung von der Freigabekonfiguration in die Greifkonfiguration befindet, und wobei sich die Greifeinrichtung in der Transportkonfiguration der Hebeeinrichtung in einer Transportposition zum Transport des Transportguts befindet. Dabei befindet sich die Greifeinrichtung in der Transportposition weiter oben als in der Ladeposition. Zudem ist die Greifeinrichtung nach dem Ergreifen des Transportguts in der Greifkonfiguration zusammen mit dem Transportgut durch verstellen der Hebeeinrichtung von der Ladekonfiguration in die Transportkonfiguration von der Ladeposition in die Transportposition anhebbar.

### Stand der Technik

Transportvorrichtungen, welche zum eingangs genannten technischen Gebiet gehören, sind bekannt. Die DE 25 20 645 A1 von I<arl Weissenrieder beispielsweise beschreibt eine derartige Transporteinrichtung. Diese Transportvorrichtung ist für den Transport von Transportpaletten geeignet. Sie umfasst einen Tragrahmen, an welchem Fahrzeugräder angebracht sind, auf welchen die Transportvorrichtung von einem Ort an einen anderen Ort gefahren werden kann. An diesem Tragrahmen sind ferner Tragschienen gehalten, welche durch eine Hebeeinrichtung in vertikaler Richtung relativ zum Tragrahmen verstellbar sind. An den Tragschienen sind als Greifeinrichtung horizontal schwenkbare Laufrollen angeordnet. Wenn sich die Tragschienen in einer unteren Position befinden, können die Laufrollen zum Ergreifen der Transportpaletten horizontal in Aufnahmevertiefungen der Transportpaletten einschwenkt werden, sodass sie an eine untere Fläche der Bodenwand der Transportpaletten anliegen. In dieser Stellung der Laufrollen können die Tragschienen zusammen mit den Laufrollen nach oben gehoben werden, wodurch auch die Transportpaletten für den Transport nach oben angehoben werden.

Die US 3,045,848 A zeigt weiter einen gattungsgemässen Portalhubwagen, welcher eine Greifeinrichtung und eine Hebeeinrichtung zum Anheben einer Ladung offenbart.

Derartige Transportvorrichtungen ermöglichen zwar aufgrund der schwenkbaren Laufrollen ein schonendes Ergreifen der Transportpaletten und damit des Transportguts. Sie haben jedoch den Nachteil, dass die Transportpaletten und damit das Transportgut für den Transport nicht sicher ergriffen und gehalten werden können und dass eine optimale Positionierung des Transportguts für den Transport I<aum möglich ist.

Für die Beschreibung von solchen Transportvorrichtungen sowie auch für die Beschreibung der erfindungsgemässen Transportvorrichtungen werden im vorliegenden Text Begriffe wie "oben", "unten", "horizontal" und "vertikal" verwendet. Diese Begriffe beziehen sich auf eine für den Einsatz der Transportvorrichtung, d.h. das Ergreifen, Anheben, Absenken und Transportieren des Transportguts korrekte Ausrichtung der Transportvorrichtung im Raum. Dabei wird "unten" und "oben" in Bezug auf die Ausrichtung der Schwerkraft verwendet. So bedeutet "nach oben" entgegen der Ausrichtung der Schwerkraft, während nach "nach unten" in Richtung der Ausrichtung der Schwerkraft bedeutet. Entsprechend bedeutet auch "anheben" entgegen der Ausrichtung der Schwerkraft bewegen, während "absenken" entlang der Ausrichtung der Schwerkraft bedeutet. In diesem Sinne bedeutet "vertikal" entlang oder entgegen der Ausrichtung der Schwerkraft, während "horizontal" in einer rechtwinklig zur Ausrichtung der Schwerkraft ausgerichteten Ebene bedeutet. In diesem Sinne bedeutet "im Wesentlichen horizontal" in einer Ebene, deren Normalvektor einen Winkel von 45° oder weniger zur Ausrichtung zur Schwerkraft einnimmt. Weiter werden die Begriffe "weiter oben" und "weiter unten" zum Vergleichen von zwei Positionen verwendet, welche sich in unterschiedlichen, in Ausrichtung der Schwerkraft zueinander versetzt angeordneten, horizontalen Ebenen befinden. Dabei befindet sich die Position, welche sich "weiter oben" befindet, in der oberen horizontalen Ebene der beiden horizontalen Ebenen, während sich die Position, welche sich "weiter unten" befindet, in der unteren horizontalen Ebene der beiden horizontalen Ebenen befindet. Dabei befindet sich die obere horizontale Ebene in einer Richtung entgegen der Ausrichtung der Schwerkraft von der unteren horizontalen Ebene.

### Darstellung der Erfindung

Aufgabe der Erfindung ist es, eine dem eingangs genannten technischen Gebiet zugehörende Transportvorrichtung zu schaffen, welche ein sicheres und das Transportgut schonendes Ergreifen des Transportguts sowie ein sicheres Halten des Transportguts ermöglicht, wobei gleichzeitig zuverlässig eine optimale Positionierung des Transportguts für den Transport ermöglicht werden kann.

Die Lösung der Aufgabe ist durch die Merkmale des Anspruchs 1 definiert. Gemäss der Erfindung ist die Greifeinrichtung derart ausgebildet, dass in der Ladekonfiguration der Hebeeinrichtung durch Verstellen der Greifeinrichtung von der Freigabekonfiguration in die Greifkonfiguration beim Ergreifen des Transportguts das Transportgut nach oben angehoben wird. Das bedeutet, dass in der Ladekonfiguration der Hebeeinrichtung durch Verstellen der Greifeinrichtung von der Freigabekonfiguration in die Greifkonfiguration zum Ergreifen des Transportguts das Transportgut nach oben anhebbar ist. Dabei reicht es aus, wenn die Greifeinrichtung derart ausgebildet ist, dass in der Ladekonfiguration der Hebeeinrichtung das Transportgut beim Ergreifen des Transportguts durch Verstellen der Greifeinrichtung von der Freigabekonfiguration in die Greifkonfiguration um bevorzugt mindestens 1 cm, besonders bevorzugt mindestens 2, ganz besonders bevorzugt mindestens 3 cm angehoben wird bzw. anhebbar ist. Bei diesem Vorgang verbleiben die Hebeeinrichtung in der Ladekonfiguration und die Greifeinrichtung entsprechend in der Ladeposition. Entsprechend wird das Transportgut alleine durch das Verstellen der Greifeinrichtung von der Freigabekonfiguration in die Haltel<onfiguration zum Ergreifen des Transportguts etwas angehoben.

Beim Transportgut kann es sich um eine beliebige Art von Transportgut handeln. So kann es sich beispielsweise um Kisten, Körbe oder dergleichen handeln. Besonders bevorzugt jedoch handelt es sich beim Transportgut um Transportpaletten, insbesondere Europoolpaletten, wobei unerheblich ist, ob die Transportpaletten beladen oder unbeladen, d.h. leer, sind. Eine Transportpalette ist eine flache Konstruktion, die zur Bündelung, Lagerung und für den Transport größerer Mengen Waren, vorzugsweise stapelbarer Waren oder einzelner schwererer Artikel verwendet wird. Bewegt und verladen werden Transportpaletten unter anderem auch mit Flurfördergeräten, wie beispielsweise Hubwagen oder Gabelstaplern. Transportpaletten weisen jeweils eine bestimmte Grösse auf. Europoolpaletten sind ein Beispiel solcher Transportpaletten einer bestimmten Grösse. Bei diesen Europolpaletten handelt es sich um mehrwegfähige Transportpaletten, welche nach der DIN EN 13698-1:2004-01 genormt sind. Sie sind aus Holz gefertigt und weisen eine Grundfläche von 0.96 Quadratmeter und eine Länge von 1200 mm, eine Breite von 800 mm und eine Höhe von 144 mm auf.

Transportpaletten weisen an ihrer Bodenwand Aufnahmevertiefungen für den Eingriff von Greifern zum Aufnehmen und/oder Transportieren auf. Wenn das Transportgut daher beladene oder leere Transportpaletten sind, so weisen die beiden Greifeinheiten bevorzugt Eingriffselemente zum in Eingriff bringen mit den Aufnahmevertiefungen der Transportpaletten auf, wobei die Eingriffselemente in der Greifstellung der Greifeinheiten in die Aufnahmevertiefungen der Transportpaletten eingreifen können. Ob dabei jeweils nur eine oder auch gleichzeitig mehr als eine, beispielsweise zwei oder drei Transportpaletten ergriffen werden können, ist unerheblich.

Die erfindungsgemässe Transportvorrichtung umfasst eine Trageeinrichtung, welche wenigstens zwei Räder umfasst, auf welchen die Transportvorrichtung von einem Ort an einen anderen Ort bewegt werden kann. Das bedeutet, dass die Transportvorrichtung auf den wenigstens zwei Rädern der Trageeinrichtung von einem Ort an einen anderen Ort gerollt bzw. gefahren werden kann. Ob die Trageeinrichtung oder eine sonstige Einrichtung der Transportvorrichtung dabei einen Antrieb zur Bewegung der Transportvorrichtung auf den wenigstens zwei Rädern der Trageeinrichtung von einem Ort an einen anderen Ort aufweist oder nicht, ist unerheblich.

Die erfindungsgemässe Transportvorrichtung umfasst weiter eine an der Trageeinrichtung angeordnete Hebeeinrichtung zum Anheben und Absenken der Greifeinrichtung relativ zur Trageeinrichtung. Dabei ist die Greifeinrichtung an der Hebeeinrichtung angeordnet. Somit ist die Greifeinrichtung bevorzugt durch die Hebeeinrichtung an der Trageeinrichtung relativ zur Trageeinrichtung nach oben und nach unten bewegbar gehalten.

Gemäss der Erfindung ist die Greifeinrichtung derart ausgebildet, dass in der Ladekonfiguration der Hebeeinrichtung durch Verstellen der Greifeinrichtung von der Freigabekonfiguration in die Greifkonfiguration beim Ergreifen des Transportguts das Transportgut nach oben angehoben wird. Wie bereits erwähnt, verbleiben bei diesem Vorgang die Hebeeinrichtung in der Ladekonfiguration und entsprechend die Greifeinrichtung in der Ladeposition. Somit wird das Transportgut beim Ergreifen des Transportguts alleine durch das Verstellen der Greifeinrichtung von der Freigabekonfiguration in die Haltel<onfiguration zum Ergreifen des Transportguts etwas angehoben. Dies hat einerseits den Vorteil, dass unmittelbar sichtbar und damit überprüfbar ist, ob das Transportgut sicher ergriffen worden ist oder nicht. Andererseits hat dies den Vorteil, dass das Transportgut beim Ergreifen nicht auf seiner bisherigen Unterlage verschoben wird. Somit kann besonders bei unebenem Untergrund eine Beschädigung des Transportguts beim Ergreifen weitestgehend verhindert werden. Ausserdem kann durch das Anheben des Transportguts beim Ergreifen des Transportguts zuverlässig eine optimale Positionierung des Transportguts für den Transport ermöglicht werden, weil das Transportgut nach dem Anheben aufgrund der Schwerkraft auf der Greifeinrichtung aufliegt und dabei durch geeignete Formgebung der Greifeinrichtung von selbst optimal für den Transport positioniert werden kann.

Vorzugsweise befindet sich das Transportgut zum Ergreifen des Transportguts zwischen den beiden Greifeinheiten. Hierzu kann bevorzugt die Transportvorrichtung derart über das Transportgut bewegt werden, dass sich das Transportgut zwischen den beiden Greifeinheiten befindet. Dies hat den Vorteil, dass für den Transport ein sicheres und stabiles Ergreifen und Anheben des Transportguts ermöglicht wird.

Alternativ dazu besteht aber auch die Möglichkeit, dass sich das Transportgut zum Ergreifen des Transportguts nicht zwischen den beiden Greifeinheiten befindet.

Vorteilhafterweise befindet sich die Hebeeinrichtung zum Transport des Transportguts in der Transportkonfiguration, wobei sich die Greifeinrichtung in der Transportposition in der Greifkonfiguration befindet und das Transportgut ergriffen hält. Dies hat den Vorteil, dass ein sicherer Transport des Transportguts ermöglicht wird.

Alternativ dazu besteht aber auch die Möglichkeit, dass sich die Hebeeinrichtung zum Transport des Transportguts zwar in der Transportkonfiguration und die Greifeinrichtung in der Transportposition befinden, aber dass sich dabei die Greifeinrichtung beispielsweise nicht in der Greifkonfiguration befindet und/oder das Transportgut nicht ergriffen hält.

Vorzugsweise ist die Transportvorrichtung dazu eingerichtet, um nach einem Transport des Transportguts das Transportgut abzusetzen. Hierzu ist vorzugsweise die Greifeinrichtung zusammen mit dem Transportgut durch verstellen der Hebeeinrichtung von der Transportkonfiguration in die Ladekonfiguration von der Transportposition in die Ladeposition absenkbar. Vorzugsweise ist die Greifeinrichtung zum Freigeben des Transportguts und damit zum Absetzen des Transportguts von der Greifkonfiguration in eine Freigabekonfiguration verstellbar. Bevorzugt befinden sich bei diesem Freigeben des Transportguts die Hebeeinrichtung in der Ladekonfiguration und die Greifeinrichtung entsprechend in der Ladeposition. Dies hat den Vorteil, dass zuverlässig ein sicheres und schonendes Absetzen des Transportguts ermöglicht wird.

In einer Variante dazu besteht aber auch die Möglichkeit, dass die Transportvorrichtung dazu eingerichtet ist, um nach einem Transport des Transportguts das Transportgut andersartig abzusetzen. In einer bevorzugten derartigen Variante weist die Hebeeinrichtung hierzu eine Entladel<onfiguration auf, in welcher sich die Greifeinrichtung in einer Entladeposition befindet, in welcher sich die Greifeinrichtung weiter unten als in der Ladeposition befindet. Dadurch kann das Transportgut alleine durch Verstellen der Hebeeinrichtung von der Transportkonfiguration in die Entladel<onfiguration abgesetzt werden, während sich die Greifeinrichtung in der Greifkonfiguration befindet. In diesem Fall ist die Greifeinrichtung in der Entladel<onfiguration der Hebeeinrichtung und damit in ihrer Entladeposition von der Greifkonfiguration in die Freigabekonfiguration verstellbar, um das Transportgut freizugeben. Dies hat ebenfalls den Vorteil, dass zuverlässig ein sicheres und schonendes Absetzen des Transportguts ermöglicht wird.

Als Alternative zu diesen Varianten besteht auch die Möglichkeit, dass die Transportvorrichtung nicht dazu eingerichtet ist, um nach einem Transport des Transportguts das Transportgut abzusetzen. In diesem Fall kann das Transportgut beispielsweise durch eine andere Vorrichtung, wie beispielsweise einen Kran, abgehoben werden, oder die Greifeinrichtung kann in der Transportkonfiguration der Hebeeinrichtung und damit in der Transportposition von der Greifkonfiguration in die Haltel<onfiguration verstellt werden, um das Transportgut freizugeben.

Bevorzugt umfasst die Transportvorrichtung einen Hebeeinrichtungsantrieb, insbesondere einen hydraulischen Hebeeinrichtungsantrieb oder einen elektrischen Hebeeinrichtungsantrieb, zum Antreiben der Hebeeinrichtung zum Anheben der Greifeinrichtung relativ zur Trageeinrichtung von der Ladeposition in die Transportposition beim Verstellen der Hebeeinrichtung von der Ladekonfiguration in die Transportkonfiguration. Im Falle eines hydraulischen Hebeeinrichtungsantriebs umfasst der hydraulische Hebeeinrichtungsantrieb bevorzugt einen Hydraulikanschluss. Dabei besteht die Möglichkeit, dass die Transportvorrichtung eine Hydraulikpumpe umfasst, an welche der hydraulische Hebeeinrichtungsantrieb anschliessbar oder angeschlossen ist, oder dass der hydraulische Hebeeinrichtungsantrieb an eine externe Hydraulikpumpe anschliessbar ist. Unabhängig von der Antriebsart hat der Hebeeinrichtungsantrieb den Vorteil, dass die Hebeeinrichtung rasch und einfach von der Ladekonfiguration in die Transportkonfiguration und, sofern vorhanden, von der Entladel<onfiguration in die Ladekonfiguration sowie die Transportkonfiguration verstellt werden kann.

Unabhängig von der Antriebsart dient der Hebeeinrichtungsantrieb vorzugsweise zusätzlich auch zum Antreiben der Hebeeinrichtung zum Absenken der Greifeinrichtung relativ zur Trageeinrichtung von der Transportposition in die Ladeposition beim Verstellen der Hebeeinrichtung von der Transportkonfiguration in die Ladekonfiguration und, sofern vorhanden, zum Absenken der Greifeinrichtung relativ zur Trageeinrichtung bis in die Entladeposition beim Verstellen der Hebeeinrichtung in die Entladel<onfiguration.

In einer Variante dazu besteht aber auch die Möglichkeit, dass der Hebeeinrichtungsantrieb nur zum Antreiben der Hebeeinrichtung zum Anheben der Greifeinrichtung relativ zur Trageeinrichtung und nicht zum Absenken der Greifeinrichtung relativ zur Trageeinrichtung dient.

Alternativ dazu besteht auch die Möglichkeit, dass die Transportvorrichtung keinen solchen Hebeeinrichtungsantrieb umfasst.

Vorteilhafterweise umfasst die Transportvorrichtung einen Greifeinrichtungsantrieb, insbesondere einen hydraulischen Greifeinrichtungsantrieb oder einen elektrischen Greifeinrichtungsantrieb, zum Verstellen der beiden Greifeinheiten von der Freigabestellung in die Greifstellung und zurück beim Verstellen der Greifeinrichtung von der Freigabekonfiguration in die Greifkonfiguration und zurück. Im Falle eines hydraulischen Greifeinrichtungsantriebs umfasst der hydraulische Greifeinrichtungsantrieb bevorzugt einen Hydraulikanschluss. Dabei besteht die Möglichkeit, dass die Transportvorrichtung eine Hydrauhkpumpe umfasst, an welche der hydraulische Greifeinrichtungsantrieb anschliessbar oder angeschlossen ist, oder dass der hydraulische Greifeinrichtungsantrieb an eine externe Hydraulikpumpe anschliessbar ist. Unabhängig von der Antriebsart hat der Greifeinrichtungsantrieb den Vorteil, dass die Greifeinrichtung rasch und einfach von der Freigabekonfiguration in die Greifkonfiguration und zurück verstellt werden kann.

Alternativ dazu besteht auch die Möglichkeit, dass die Transportvorrichtung keinen solchen Greifeinrichtungsantrieb umfasst.

In einer ersten, bevorzugten Variante weisen die beiden Greifeinheiten je einen proximalen Bereich und einen distalen Bereich auf, wobei die beiden Greifeinheiten in ihrem distalen Bereich je wenigstens einen distalen Greifabschnitt zum Ergreifen des Transportguts aufweisen, wobei ein Abstand zwischen dem wenigstens einen distalen Greifabschnitt einer ersten der beiden Greifeinheiten und dem wenigstens einen distalen Greifabschnitt einer zweiten der beiden Greifeinheiten in der Freigabekonfiguration der Greifeinrichtung grösser als in der Greifkonfiguration der Greifeinrichtung ist. Dies hat den Vorteil, dass das Transportgut optimal zuverlässig ergriffen werden kann.

In einer zweiten Variante ist der Abstand zwischen dem wenigstens einen distalen Greifabschnitt der ersten der beiden Greifeinheiten und dem wenigstens einen distalen Greifabschnitt der zweiten der beiden Greifeinheiten in der Freigabekonfiguration der Greifeinrichtung gleich gross oder kleiner als in der Greifkonfiguration der Greifeinrichtung.

Wenn das Transportgut beladene oder leere Transportpaletten, insbesondere beladene oder leere Europoolpaletten sind, so bilden in beiden vorgenannten Varianten die wenigstens einen distalen Greifabschnitte zum Ergreifen des Transportguts vorzugsweise Eingriffselemente zum in Eingriff bringen mit den Aufnahmevertiefungen der Transportpaletten, wobei die wenigstens einen distalen Greifabschnitte in der Greifstellung der Greifeinheiten in die Aufnahmevertiefungen einer oder mehrerer Transportpaletten eingreifen und die eine oder mehreren Transportpaletten dadurch ergreifen, anheben und halten können.

Unabhängig davon, ob das Transportgut Transportpaletten sind oder nicht, weisen in beiden vorgenannten Varianten die beiden Greifeinheiten je einen proximalen Bereich und einen distalen Bereich auf. Dabei sind die beiden Greifeinheiten bevorzugt je in ihrem proximalen Bereich an der Hebeeinrichtung angeordnet sind. Besonders bevorzugt sind dabei die Greifeinheiten je in ihrem proximalen Bereich an der zu den zwei Greifeinheiten allenfalls vorhandenen restlichen Greifeinrichtung und damit indirekt an der Hebeeinrichtung oder aber direkt an der Hebeeinrichtung angeordnet. In diesem Zusammenhang beziehen sich die Begriffe "proximal" und "distal" jeweils auf die jeweilig genannte Greifeinheit und bildet damit ein durch die jeweilig genannte Greifeinheit definiertes lokales Bezugssystem. Falls sich in einem globalen Bezugssystem bei beiden Greifeinheiten der proximale Bereich in einer gleichen Richtung vom distalen Bereich befindet, so entsprechen sich die lokalen Bezugssysteme der beiden Greifeinheiten. Die lokalen Bezugssysteme der beiden Greifeinheiten können aber auch anders zueinander ausgerichtet sein und sich sogar entgegengesetzt ausgerichtet sein. In einem ersten Beispiel dazu weist die Greifeinrichtung wenigstens ein weiteres Element zu den wenigstens zwei Greifeinheiten auf, wobei das wenigstens eine weitere Element die zu den zwei Greifeinheiten restliche Greifeinrichtung bildet, wobei die zu den zwei Greifeinheiten restliche Greifeinrichtung die beiden Greifeinheiten umgreift, wobei die beiden Greifeinheiten an sich gegenüberliegenden Seiten an der die zwei Greifeinheiten umgreifenden, zu den zwei Greifeinheiten restlichen Greifeinrichtung angeordnet sind und wobei die distalen Bereiche der beiden Greifeinheiten einander zu gewandt und die proximalen Bereiche der beiden Greifeinheiten voneinander abgewandt sind. In einem zweiten Beispiel dazu umgreift die Hebeeinrichtung die beiden Greifeinheiten, wobei die beiden Greifeinheiten an sich gegenüberliegenden Seiten der sie umgreifenden Hebeeinrichtung angeordnet sind, wobei die beiden Greifeinheiten an sich gegenüberliegenden Seiten an der Hebeeinrichtung angeordnet sind und wobei die distalen Bereiche der beiden Greifeinheiten einander zu gewandt und die proximalen Bereiche der beiden Greifeinheiten voneinander abgewandt sind.

Entsprechend dieser lokalen Referenzsysteme der Greifeinheiten werden im vorliegenden Text für die jeweilige Greifeinheit Begriffe wie "proximale Seite" und "distale Seite" für die Angabe, auf welcher Seite einer Stelle oder eines Punktes auf oder an der jeweiligen Greifeinheit sich etwas befindet, verwendet. Genauso werden im vorliegenden Text für die jeweilige Greifeinheit Begriffe wie "proximale Richtung" und "distale Richtung" als Richtungsangabe verwendet.

In beiden vorgenannten Varianten, in welchen die beiden Greifeinheiten je einen proximalen Bereich und einen distalen Bereich aufweisen, sind die beiden Greifeinheiten bevorzugt in der Greifkonfiguration der Greifeinrichtung mit ihren distalen Bereichen einander zu gewandt und mit ihren proximalen Bereichen voneinander abgewandt ausgerichtet. Dies hat den Vorteil, dass das Transportgut optimal zwischen den Greifeinheiten ergriffen und gehalten werden kann. In einer besonders bevorzugten Variante sind die beiden Greifeinheiten auch in der Freigabekonfiguration der Greifeinrichtung mit ihren distalen Bereichen einander zu gewandt und mit ihren proximalen Bereichen voneinander abgewandt ausgerichtet. Es besteht aber auch die Möglichkeit, dass die beiden Greifeinheiten in der Freigabekonfiguration der Greifeinrichtung nicht mit ihren distalen Bereichen einander zu gewandt und mit ihren proximalen Bereichen voneinander abgewandt ausgerichtet sind.

In einer weiteren Variante besteht die Möglichkeit, dass die beiden Greifeinheiten in der Greifkonfiguration der Greifeinrichtung nicht mit ihren distalen Bereichen einander zu gewandt und mit ihren proximalen Bereichen voneinander abgewandt ausgerichtet sind.

Alternativ zu diesen Varianten besteht auch die Möglichkeit, dass die beiden Greifeinheiten nicht in ihrem distalen Bereich je wenigstens einen distalen Greifabschnitt zum Ergreifen des Transportguts aufweisen.

Sofern die beiden Greifeinheiten je einen proximalen Bereich und einen distalen Bereich aufweisen, wobei die beiden Greifeinheiten in ihrem distalen Bereich je wenigstens einen distalen Greifabschnitt zum Ergreifen des Transportguts aufweisen, so weisen unabhängig davon, ob die beiden Greifeinheiten in der Greifkonfiguration der Greifeinrichtung mit ihren distalen Bereichen einander zu gewandt und mit ihren proximalen Bereichen voneinander abgewandt ausgerichtet sind oder nicht, die wenigstens einen distalen Greifabschnitte der beiden Greifeinheiten bevorzugt je einen distalen Oberflächenbereich auf, welcher in der Greifstellung der Greifeinheiten zum Kontaktieren und Halten des Transportguts nach oben gewandt und im Wesentlichen horizontal, besonders bevorzugt horizontal ausgerichtet ist. Dies hat unabhängig davon, ob der Abstand zwischen dem wenigstens einen distalen Greifabschnitt der ersten der beiden Greifeinheiten und dem wenigstens einen distalen Greifabschnitt der zweiten der beiden Greifeinheiten in der Freigabekonfiguration der Greifeinrichtung grösser, gleich gross oder kleiner als in der Greifkonfiguration der Greifeinrichtung ist, den Vorteil, dass ein sicheres und das Transportgut schonendes Halten und Anheben des Transsportguts ermöglicht wird, da das Transportgut auf den nach oben gerichteten distalen Oberflächenbereichen aufliegt und somit einzig durch die Schwerkraft auf den nach oben gerichteten distalen Oberflächenbereichen gehalten wird und so angehoben und gegebenenfalls auch abgesenkt werden kann.

Alternativ dazu besteht auch die Möglichkeit, dass die wenigstens einen distalen Greifabschnitte der beiden Greifeinheiten nicht je einen distalen Oberflächenbereich aufweisen, welcher in der Greifstellung der Greifeinheiten zum Kontaktieren und Halten des Transportguts nach oben gewandt und im Wesentlichen horizontal ausgerichtet ist.

Falls die beiden Greifeinheiten je einen proximalen Bereich und einen distalen Bereich aufweisen, wobei die beiden Greifeinheiten in ihrem distalen Bereich je wenigstens einen distalen Greifabschnitt zum Ergreifen des Transportguts aufweisen, und falls die wenigstens einen distalen Greifabschnitte der beiden Greifeinheiten je einen distalen Oberflächenbereich aufweisen, welcher in der Greifstellung der Greifeinheiten zum Kontaktieren und Halten des Transportguts nach oben gewandt und im Wesentlichen horizontal bzw. horizontal ausgerichtet ist, so weisen die wenigstens einen distalen Greifabschnitte der beiden Greifeinheiten bevorzugt je einen nach oben gewandten, proximalen Oberflächenbereich auf, welcher auf proximaler Seite des distalen Oberflächenbereichs des jeweiligen wenigstens einen distalen Greifabschnitts angeordnet ist, wobei in der Greifstellung der Greifeinheiten die proximalen Oberflächenbereiche jeweils ausgehend vom distalen Oberflächenbereich des jeweiligen wenigstens einen distalen Greifabschnitts in proximale Richtung vom jeweiligen distalen Oberflächenbereich weg nach oben ansteigen.

Dies hat den Vorteil, dass beim Anheben des Transportguts beim Ergreifen des Transportguts zuverlässig eine optimale Positionierung des Transportguts für den Transport erreicht werden kann, weil das Transportgut nach dem Anheben aufgrund der Schwerkraft auf der Greifeinrichtung aufliegt und dabei aufgrund der Schwerkraft auf den proximalen Oberflächenbereichen der Greifeinheiten in eine stabile Lage abgleiten kann. Dabei kann das Transportgut in der stabilen Lage beispielsweise auf den distalen Oberflächenbereichen der Greifeinheiten stabil aufliegen. Entsprechend kann dadurch das Transportgut von selbst beim Ergreifen des Transportguts optimal für den Transport positioniert werden. Dieser Vorteil wird ganz besonders einfach erreicht, wenn die beiden Greifeinheiten in der Greifkonfiguration der Greifeinrichtung mit ihren distalen Bereichen einander zu gewandt und mit ihren proximalen Bereichen voneinander abgewandt ausgerichtet sind, weil dadurch das Transportgut zwischen den Greifeinheiten ergriffen und gehalten werden kann. Dabei ist besonders vorteilhaft, wenn in der Greifkonfiguration der Greifeinrichtung die Greifeinheiten derart positioniert sind, dass paarweise einer des wenigstens einen distalen Greifabschnitts der ersten der beiden Greifeinheiten einem des wenigstens einen distalen Greifabschnitts der zweiten der beiden Greifeinheiten gegenüberliegt, wobei die proximalen Oberflächenbereiche der paarweise sich gegenüberliegenden distalen Greifabschnitte einen Abstand zueinander aufweisen, welcher im Bereich von 0 mm bis 10 mm grösser als eine Breite des Transportguts, insbesondere der Transportpalette bzw. der Europoolpalette ist, sodass in der Greifkonfiguration der Greifeinrichtung bei ergriffenem Transportgut, insbesondere Transportpalette bzw. Europoolpalette, das Transportgut, insbesondere die Transportpalette bzw. Europoolpalette, auf den distalen Oberflächenbereichen der paarweise sich gegenüberliegenden distalen Greifabschnitte aufliegt, während sich die proximalen Oberflächenbereiche der paarweise sich gegenüberliegenden distalen Greifabschnitte gerade ausserhalb des Transportguts, insbesondere der Transportpalette, bzw. der Europoolpalette befinden. In diesem Zusammenhang ist mit "Breite des Transportguts, insbesondere der Transportpalette bzw. der Europoolpalette" nicht die Breite im Vergleich zu einer Länge des Transportguts, insbesondere der Transportpalette bzw. der Europoolpalette, sondern eine Ausdehnung des Transportguts, insbesondere der Transportpalette bzw. der Europoolpalette, entlang einer Geraden, entlang welcher die paarweise sich gegenüberliegenden distalen Greifabschnitte von beiden Seiten her das Transportgut, insbesondere die Transportpalette bzw. die Europoolpalette, ergreifen, gemeint.

Alternativ dazu besteht aber auch die Möglichkeit, dass die Greifeinheiten keine derartigen proximalen Oberflächenbereiche aufweisen.

Vorzugsweise sind die beiden Greifeinheiten zum Verstellen von der Freigabestellung in die Greifstellung und zurück je entlang einem Verstellweg verschiebbar gelagert. Dies hat den Vorteil, dass eine stabile Lagerung der Greifeinheiten erreicht werden kann.

Vorteilhafterweise weisen dabei die Verstellwege der beiden Greifeinheiten je eine horizontale Komponente auf. Dies hat den Vorteil, dass die beiden Greifeinheiten zum Verstellen der Greifeinrichtung von der Freigabekonfiguration in die Greifkonfiguration beim Ergreifen des Transportguts optimal relativ zueinander von der Freigabestellung in die Greifstellung bewegbar ausgebildet werden können, um das Transportgut beispielsweise symmetrisch von beiden Seiten zu ergreifen. Entsprechend wird dadurch ein sicheres und das Transportgut besonders schonendes Ergreifen des Transportguts ermöglicht. Um diesen Vorteil zu erreichen ist unerheblich, ob die Verstellwege der beiden Greifeinheiten je an jeder Position entlang des gesamten jeweiligen Verstellwegs oder nur an jeder Position in einem oder mehreren Abschnitten des jeweiligen Verstellwegs eine horizontale Komponente aufweisen.

Falls dabei die beiden Greifeinheiten je einen proximalen Bereich und einen distalen Bereich aufweisen, wobei die beiden Greifeinheiten in ihrem distalen Bereich je wenigstens einen distalen Greifabschnitt zum Ergreifen des Transportguts aufweisen, wobei ein Abstand zwischen dem wenigstens einen distalen Greifabschnitt einer ersten der beiden Greifeinheiten und dem wenigstens einen distalen Greifabschnitt einer zweiten der beiden Greifeinheiten in der Freigabekonfiguration der Greifeinrichtung grösser als in der Greifkonfiguration der Greifeinrichtung ist, so sind der wenigstens eine distale Greifabschnitt der ersten der beiden Greifeinheiten und der wenigstens eine distale Greifabschnitt der zweiten der beiden Greifeinheiten vorzugsweise durch Verschieben der beiden Greifeinheiten entlang der Verstellwege zum Verstellen von der Freigabestellung in die Greifstellung aufeinander zu verschiebbar.

Als Alternative besteht aber auch die Möglichkeit, dass nur der Verstellweg einer der beiden Greifeinheiten eine horizontale Komponente aufweist oder dass gar keiner der beiden Verstellwege eine horizontale Komponente aufweist.

Unabhängig davon, ob die Verstellewege der beiden Greifeinheiten je eine horizontale Komponente aufweisen oder nicht, weisen die Verstellwege der beiden Greifeinheiten bevorzugt je in einem unmittelbar an die Greifstellung anschliessenden Bereich des Verstellwegs eine vertikale Komponente auf, wobei die beiden Greifeinheiten beim Verstellen von der Freigabestellung in die Greifstellung aufgrund der vertikalen Komponente der Verstellwege je nach oben in die Greifstellung bewegt werden, um in der Ladekonfiguration der Hebeeinrichtung durch Verstellen der Greifeinrichtung von der Freigabekonfiguration in die Greifkonfiguration zum Ergreifen des Transportguts das Transportgut nach oben anzuheben. Dies hat den Vorteil, dass ein besonders sicheres und kontrolliertes Ergreifen des Transportguts ermöglicht wird.

Alternativ dazu besteht aber auch die Möglichkeit, dass die Verstellwege der beiden Greifeinheiten nicht je in einem unmittelbar an die Greifstellung anschliessenden Bereich des Verstellwegs eine vertikale Komponente aufweisen, wobei die beiden Greifeinheiten beim Verstellen von der Freigabestellung in die Greifstellung aufgrund der vertikalen Komponente der Verstellwege je nach oben in die Greifstellung bewegt werden, um in der Ladekonfiguration der Hebeeinrichtung durch Verstellen der Greifeinrichtung von der Freigabekonfiguration in die Greifkonfiguration zum Ergreifen des Transportguts das Transportgut nach oben anzuheben.

In einer bevorzugten Variante zu den vorgehend beschriebenen Varianten, bei welchen die beiden Greifeinheiten zum Verstellen von der Freigabestellung in die Greifstellung und zurück je entlang einem Verstellweg verschiebbar gelagert sind, sind die Greifeinheiten zum Verstellen von der Freigabestellung in die Greifstellung und zurück je um eine Achse schwenkbar. Dies hat ebenfalls den Vorteil, dass eine stabile Lagerung der Greifeinheiten erreicht werden kann. Dabei ist unerheblich, ob die Achsen beim Verstellen der Greifeinheiten von der Freigabestellung in die Greifstellung räumlich an einer gleichen Position bleiben oder entlang einem Achsenverstellweg bewegt werden.

Bevorzugt sind dabei die Achsen parallel zueinander ausgerichtet. Dadurch können die Greifeinheiten symmetrisch aufeinander zu oder voneinander weg geschwenkt werden, um die Greifeinrichtung von der Haltel<onfiguration in die Greifkonfiguration und zurück zu bewegen.

Alternativ dazu besteht aber auch die Möglichkeit, dass die Achsen nicht parallel zueinander ausgerichtet sind.

Unabhängig davon, ob die Achsen parallel zueinander ausgerichtet sind oder nicht, sind die Achsen vorzugsweise im Wesentlichen horizontal, insbesondere horizontal ausgerichtet. Dies hat den Vorteil, dass auf einfache Art und Weise ermöglicht wird, dass beim Ergreifen des Transportguts die Greifeinheiten von unten nach oben bewegt werden können, um in der Ladekonfiguration der Hebeeinrichtung durch Verstellen der Greifeinrichtung von der Freigabekonfiguration in die Greifkonfiguration zum Ergreifen des Transportguts das Transportgut nach oben anzuheben.

Alternativ dazu besteht aber auch die Möglichkeit, dass die Achsen nicht im Wesentlichen horizontal ausgerichtet sind.

Falls die Achsen im Wesentlichen horizontal ausgerichtet sind und falls die beiden Greifeinheiten je einen proximalen Bereich und einen distalen Bereich aufweisen, wobei die beiden Greifeinheiten in ihrem distalen Bereich je wenigstens einen distalen Greifabschnitt zum Ergreifen des Transportguts aufweisen, wobei ein Abstand zwischen dem wenigstens einen distalen Greifabschnitt einer ersten der beiden Greifeinheiten und dem wenigstens einen distalen Greifabschnitt einer zweiten der beiden Greifeinheiten in der Freigabekonfiguration der Greifeinrichtung grösser als in der Greifkonfiguration der Greifeinrichtung ist, so sind bevorzugt zum Verstellen der beiden Greifeinheiten von der Freigabestellung in die Greifstellung zum Ergreifen des Transportguts die wenigstens einen distalen Greifabschnitte der Greifeinheiten um die Achsen von unten nach oben schwenkbar, bis sich die Greifeinheiten in der Greifstellung befinden, um in der Ladekonfiguration der Hebeeinrichtung durch Verstellen der Greifeinrichtung von der Freigabekonfiguration in die Greifkonfiguration zum Ergreifen des Transportguts das Transportgut nach oben anzuheben. Dies hat den Vorteil, dass ein besonders sicheres und kontrolliertes Ergreifen des Transportguts ermöglicht wird.

Alternativ dazu besteht aber auch die Möglichkeit, dass zum Ergreifen des Transportguts die wenigstens einen distalen Greifabschnitte der Greifeinheiten andersartig um die Achsen geschwenkt werden.

Die vorgehend beschriebenen Varianten, bei welchen die beiden Greifeinheiten zum Verstellen von der Freigabestellung in die Greifstellung und zurück je entlang einem Verstellweg verschiebbar gelagert sind, und die vorgehend beschriebenen Varianten, bei welchen die Greifeinheiten zum Verstellen von der Freigabestellung in die Greifstellung und zurück je um eine Achse schwenkbar sind, schliessen sich nicht gegenseitig aus. Es sind auch Kombinationen von Varianten, bei welchen die beiden Greifeinheiten zum Verstellen von der Freigabestellung in die Greifstellung und zurück je entlang einem Verstellweg verschiebbar gelagert sind, mit Varianten, bei welchen die Greifeinheiten zum Verstellen von der Freigabestellung in die Greifstellung und zurück je um eine Achse schwenkbar sind, möglich.

Anstelle der vorgehend beschriebenen Varianten, bei welchen die beiden Greifeinheiten zum Verstellen von der Freigabestellung in die Greifstellung und zurück je entlang einem Verstellweg verschiebbar gelagert sind, und anstelle der vorgehend beschriebenen Varianten, bei welchen die Greifeinheiten zum Verstellen von der Freigabestellung in die Greifstellung und zurück je um eine Achse schwenkbar sind, können die Greifeinheiten auch andersartig von der Freigabestelle in die Greifstellung und zurück bewegbar ausgebildet sein bzw. kann die Greifeinrichtung auch andersartig von der Freigabekonfiguration in die Greifkonfiguration und zurück verstellbar ausgebildet sein.

Unabhängig davon, wie die Greifeinrichtung von der Freigabekonfiguration in die Greifkonfiguration verstellbar ausgebildet ist, weist die Transportvorrichtung vorteilhafterweise eine Abschrankung zum Schutz des Transportguts beim Transport des Transportguts auf, wobei die Abschrankung in einer aktiven Stellung in der Transportkonfiguration der Hebeeinrichtung bei von der Greifeinrichtung ergriffenem Transportgut das Transportgut auf alle vier Seiten umgreift. Dies hat den Vorteil, dass einerseits das Transportgut optimal von Ausseneinwirl<ungen geschützt transportiert werden kann und dass andererseits verhindert werden kann, dass das Transportgut aufgrund von ruckartigen Bewegungen der Transportvorrichtung während dem Transport verloren gehen kann.

Vorzugsweise umgreift die Abschrankung in der Transportkonfiguration der Hebeeinrichtung bei von der Greifeinrichtung ergriffenem Transportgut in ihrer aktiven Stellung das Transportgut auch oben. Dies hat den Vorteil, dass das Transportgut noch besser geschützt ist. Allerdings besteht auch die Möglichkeit, dass die Abschrankung in der aktiven Stellung in der Transportkonfiguration der Hebeeinrichtung bei von der Greifeinrichtung ergriffenem Transportgut das Transportgut nur auf alle vier Seiten und nicht auch noch oben umgreift.

Unabhängig davon, ob die Abschrankung in ihrer aktiven Stellung in der Transportkonfiguration der Hebeeinrichtung bei von der Greifeinrichtung ergriffenem Transportgut das Transportgut nur auf alle vier Seiten oder zusätzlich auch oben umgreift, ist die Abschrankung vorzugsweise von ihrer aktiven Stellung in eine deaktive Stellung verstellbar, in welcher die Abschrankung in der Transportkonfiguration der Hebeeinrichtung bei von der Greifeinrichtung ergriffenem Transportgut das Transportgut auf weniger als allen vier Seiten oder auf gar keiner Seite mehr umgreift. Dies hat den Vorteil, dass im Bedarfsfall in der Transportkonfiguration der Hebeeinrichtung bei von der Greifeinrichtung ergriffenem Transportgut ein Zugang zum Transportgut ermöglicht oder erleichtert wird.

Vorzugsweise ist die Abschrankung ausgehend von ihrer aktiven Stellung in zwei Teilen auf zwei gegenüberliegende Seiten in die deaktive Stellung wegschwenkbar, wobei die beiden Teile je um eine vorzugsweise horizontal ausgerichtete Schwenkachse schwenkbar sind, wobei die vorzugsweise horizontal ausgerichteten Schwenkachsen besonders bevorzugt in einem oberen Bereich der Abschrankung angeordnet sind. Dies hat den Vorteil, dass einerseits dem Transportgut Freiraum gegeben werden kann und dass andererseits im Bedarfsfall in der Transportkonfiguration der Hebeeinrichtung bei von der Greifeinrichtung ergriffenem Transportgut ein Zugang zum Transportgut ermöglicht oder erleichtert wird.

In einer Variante dazu besteht aber auch die Möglichkeit, dass Abschrankung andersartig in die deaktive Stellung verstellbar ist oder dass die Abschrankung gar nicht in eine deaktive Stellung verstellbar ist.

Alternativ zu diesen Varianten besteht auch die Möglichkeit, dass die Transportvorrichtung keine Abschrankung zum Schutz des Transportguts beim Transport des Transportguts aufweist, welche in einer aktiven Stellung in der Transportkonfiguration der Hebeeinrichtung bei von der Greifeinrichtung ergriffenem Transportgut das Transportgut auf alle vier Seiten umgreift. Eine solche Alternative hat den Vorteil, dass die Transportvorrichtung einfacher konstruiert werden kann.

Unabhängig davon, ob die Transportvorrichtung eine Abschrankung oder keine Abschrankung zum Schutz des Transportguts beim Transport des Transportguts aufweist, ist die Transportvorrichtung vorzugsweise ein Anhänger für ein motorisiertes Fahrzeug oder ein motorisiertes Fahrzeug. Dabei bilden die wenigstens zwei Räder der Trageeinrichtung, auf welchen die Transportvorrichtung von einem Ort an einen anderen Ort bewegt werden kann, vorzugsweise die Räder des Anhängers bzw. des motorisierten Fahrzeugs. Dass die Transportvorrichtung ein Anhänger für ein motorisiertes Fahrzeug oder ein motorisiertes Fahrzeug ist, hat den Vorteil, dass das Transportgut auf besonders einfach und unkompliziert mit der Transportvorrichtung transportiert werden kann.

Alternativ dazu besteht aber auch die Möglichkeit, dass die Transportvorrichtung kein Anhänger für ein motorisiertes Fahrzeug und kein motorisiertes Fahrzeug ist.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:

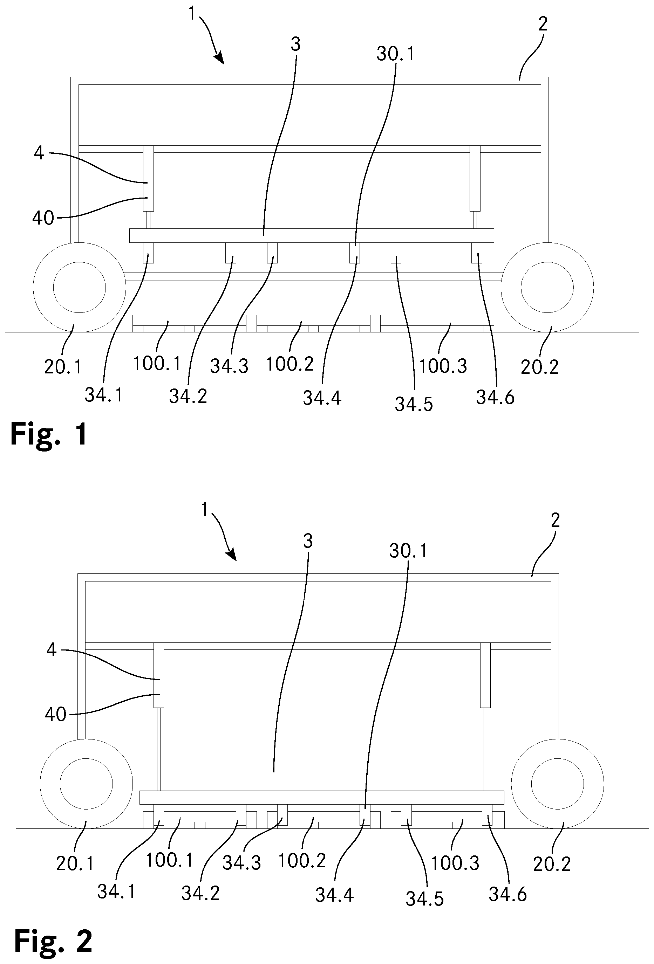

- Fig. 1: eine vereinfachte schematische Seitenansicht einer erfindungsgemässen Transportvorrichtung zum Transport von drei leeren oder beladenen Europoolpaletten, wobei die Transportvorrichtung eine Hebeeinrichtung und eine Greifeinrichtung aufweist, wobei sich die Hebeeinrichtung in einer Transportkonfiguration befindet und die Transportvorrichtung korrekt zum Ergreifen, Anheben und Transportieren von drei Europoolpaletten positioniert befindet,
- Fig. 2: eine vereinfachte schematische Seitenansicht der erfindungsgemässen Transportvorrichtung, wobei sich die Hebeeinrichtung in einer Ladekonfiguration und die Greifeinrichtung in einer Freigabekonfiguration befindet,

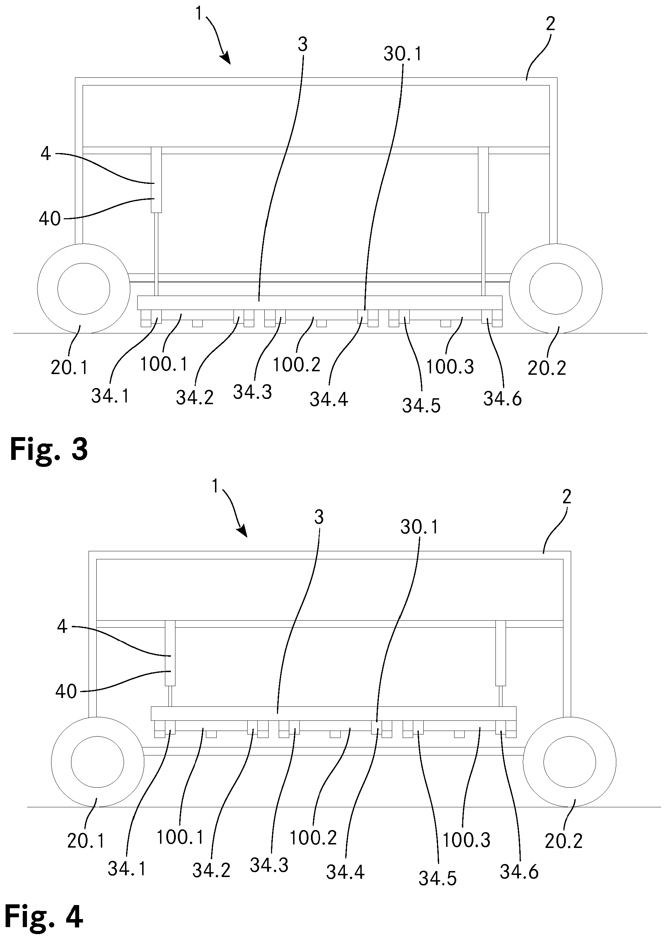

- Fig. 3: eine vereinfachte schematische Seitenansicht der erfindungsgemässen Transportvorrichtung, wobei sich die Hebeeinrichtung in der Ladekonfiguration und die Greifeinrichtung in einer Greifkonfiguration befindet und drei Europoolpaletten ergriffen und angehoben hat,
- Fig. 4: eine vereinfachte schematische Seitenansicht der erfindungsgemässen Transportvorrichtung, wobei sich die Hebeeinrichtung in der Transportkonfiguration und die Greifeinrichtung in der Greifkonfiguration befindet und drei Europoolpaletten für den Transport ergriffen und angehoben hält,

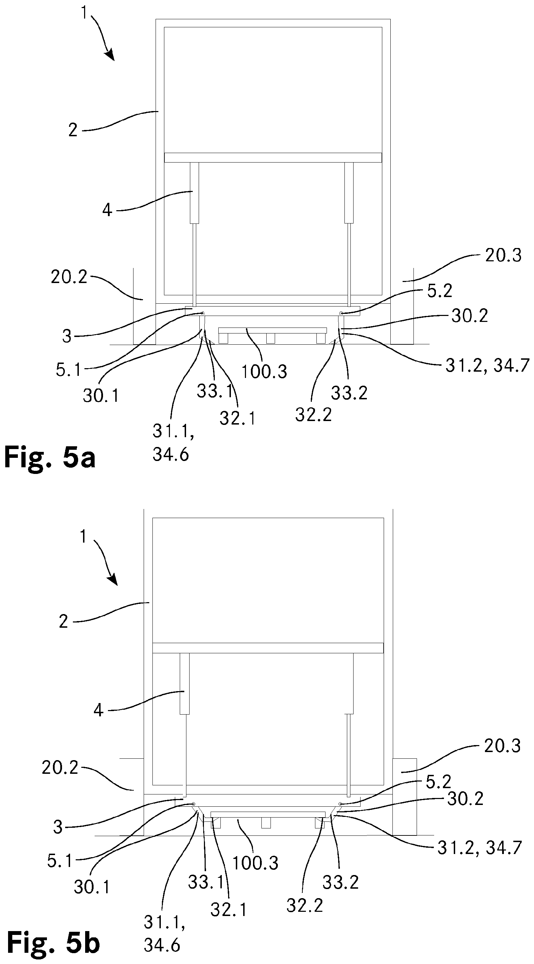

- Fig. 5a, 5b: je eine vereinfachte, schematische Frontalansicht einer ersten Variante der erfindungsgemässen Transportvorrichtung mit der Hebeeinrichtung in der Ladekonfiguration, einmal mit der Greifeinrichtung in der Freigabekonfiguration und einmal mit der Greifeinrichtung in der Greifkonfiguration mit von der Greifeinrichtung ergriffenen Europoolpaletten,

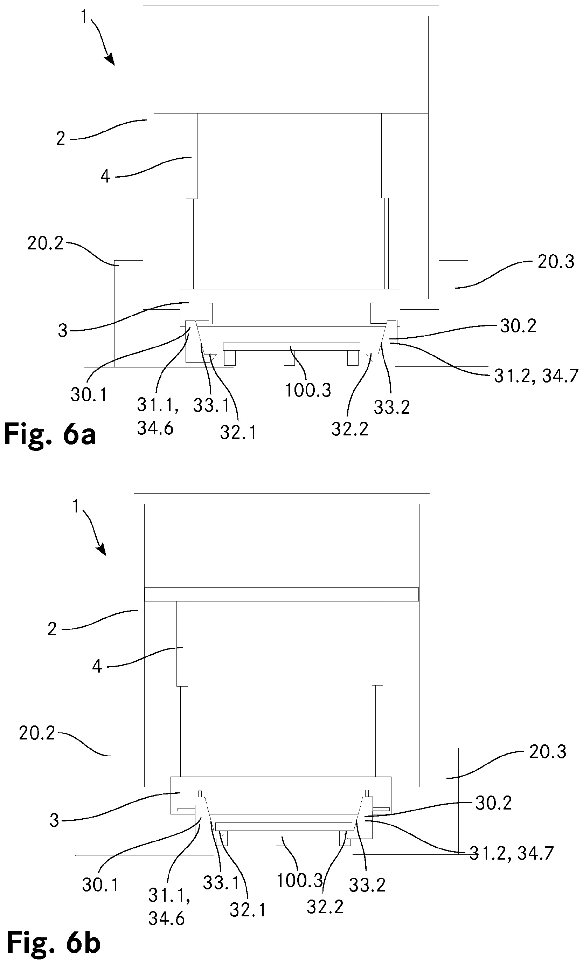

- Fig. 6a, 6b: je eine vereinfachte, schematische Frontalansicht einer zweiten Variante der erfindungsgemässen Transportvorrichtung mit der Hebeeinrichtung in der Ladekonfiguration, einmal mit der Greifeinrichtung in der Freigabekonfiguration und einmal mit der Greifeinrichtung in der Greifkonfiguration mit von der Greifeinrichtung ergriffenen Europoolpaletten,

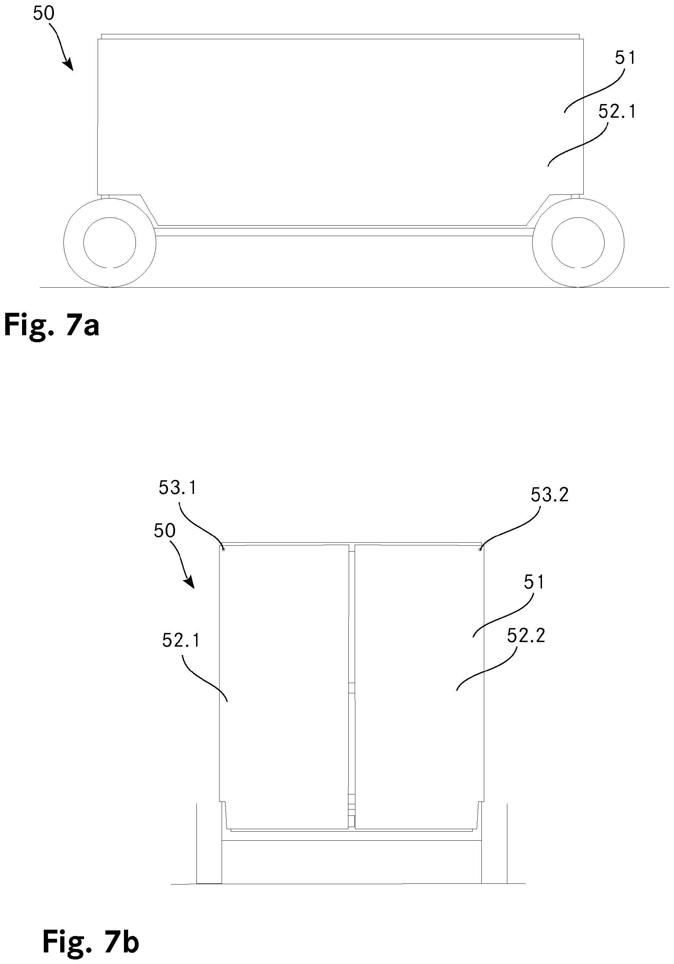

- Fig. 7a, 7b: je eine vereinfachte schematische Seitenansicht und eine vereinfachte schematische Frontalansicht einer weiteren erfindungsgemässen Transportvorrichtung zum Transport von drei leeren oder beladenen Europoolpaletten, welche eine Abschrankung umfasst, wobei die Abschrankung in einer aktiven Stellung gezeigt ist, und

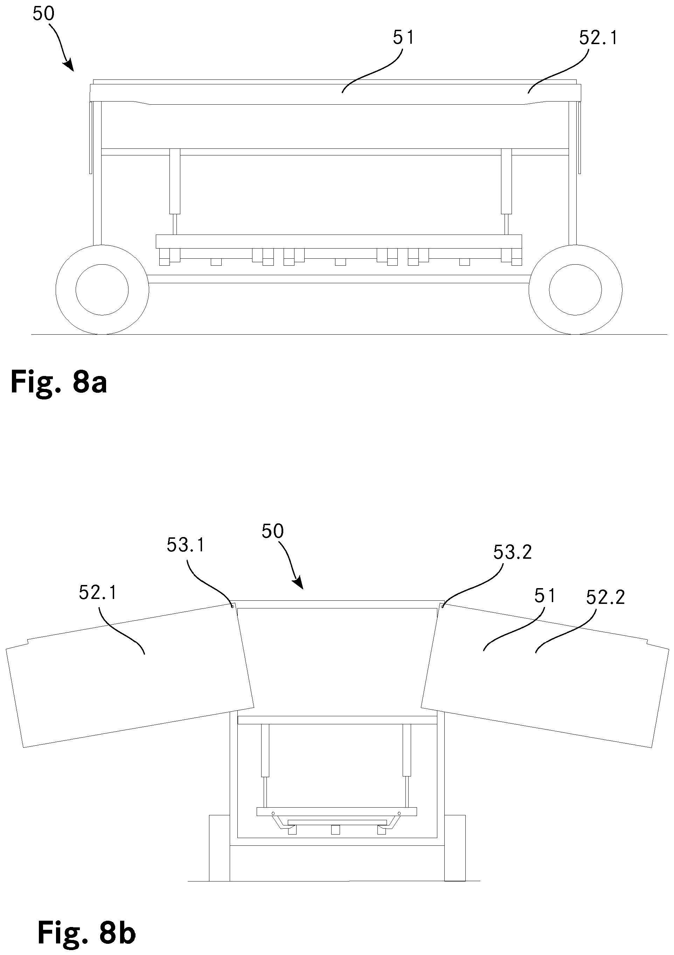

- Fig. 8a, 8b: je eine vereinfachte schematische Seitenansicht und eine vereinfachte schematische Frontalansicht der weiteren erfindungsgemässen Transportvorrichtung, wobei die Abschrankung in einer deal<tiven Stellung gezeigt ist.

Grundsätzlich sind in den Figuren gleiche Teile mit gleichen Bezugszeichen versehen.

### Wege zur Ausführung der Erfindung

Figuren 1 bis 4 zeigen je eine vereinfachte schematische Seitenansicht einer erfindungsgemässen Transportvorrichtung 1 zum Transport von drei leeren oder beladenen Europoolpaletten 100.1, 100.2, 100.3 als Transportgut und damit zum Transport von leeren oder beladenen Transportpaletten und zum Transport von Transportgut.

Die Transportvorrichtung 1 umfasst eine Trageeinrichtung 2, welche vier Räder 20.1, 20.2 umfasst. Auf diesen Rädern 20.1, 20.2 kann die Transportvorrichtung 1 von einem Ort an einen anderen Ort bewegt werden. In einer ersten Variante handelt es sich bei der Transportvorrichtung 1 um einen Anhänger für ein hier nicht gezeigtes, motorisiertes Fahrzeug wie beispielsweise ein Personenkraftwagen oder einen Traktor. Dabei kann die Transportvorrichtung 1 von diesem motorisierten Fahrzeug von einem Ort an einen anderen Ort bewegt werden. Für diese erste Variante ist der Deichsel des Anhängers in den vereinfachten, schematischen Darstellungen der Figuren 1 bis 4 nicht gezeigt. In einer zweiten Variante handelt es sich bei der Transportvorrichtung 1 um ein motorisiertes Fahrzeug. In dieser Variante umfasst die Transportvorrichtung 1 einen Motor, mit welchem wenigstens eines der Räder 20.1, 20.2 der Transportvorrichtung 1 angetrieben wird, um die Transportvorrichtung 1 von einem Ort an einen anderen Ort zu bewegen. In einer Variante davon umfasst die Transportvorrichtung 1 zudem eine hier nicht gezeigte Führerkabine für einen Fahrer der Transportvorrichtung 1.

Weiter umfasst die Transportvorrichtung 1 eine Greifeinrichtung 3 zum Ergreifen der Europoolpaletten 100.1, 100.2, 100.3, wobei die Greifeinrichtung 3 eine Freigabekonfiguration und eine Greifkonfiguration aufweist und zum Ergreifen der Europoolpaletten 100.1, 100.2, 100.3 von der Freigabekonfiguration in die Greifkonfiguration verstellbar ist. Die Greifeinrichtung 3 umfasst zwei beabstandete, sich gegenüberliegende Greifeinheiten 30.1, 30.2 zum Ergreifen der Europoolpaletten 100.1, 100.2, 100.3 (siehe hierzu auch Figuren 5a, 5b sowie 6a, 6b). Diese beiden Greifeinheiten 30.1, 30.2 befinden sich in der Freigabekonfiguration der Greifeinrichtung 3 in einer Freigabestellung und in der Greifkonfiguration der Greifeinrichtung 3 in einer Greifstellung. Die beiden Greifeinheiten 30.1, 30.2 sind zum Verstellen der Greifeinrichtung 3 von der Freigabekonfiguration in die Greifkonfiguration beim Ergreifen der Europoolpaletten 100.1, 100.2, 100.3 relativ zueinander von der Freigabestellung in die Greifstellung bewegbar.

Ausserdem umfasst die Transportvorrichtung 1 eine an der Trageeinrichtung 2 angeordnete Hebeeinrichtung 4 zum Anheben und Absenken der Greifeinrichtung 3 relativ zur Trageeinrichtung 2. Dabei ist die Greifeinrichtung 3 durch die Hebeeinrichtung 4 an der Trageeinrichtung 2 relativ zur Trageeinrichtung 2 nach oben und nach unten bewegbar gehalten. Die Hebeeinrichtung 4 weist eine Ladekonfiguration und eine Transportkonfiguration auf, wobei sich die Greifeinrichtung 3 in der Ladekonfiguration der Hebeeinrichtung 4 in einer Ladeposition zum Ergreifen der Europoolpaletten 100.1, 100.2, 100.3 durch verstellen der Greifeinrichtung 3 von der Freigabekonfiguration in die Greifkonfiguration befindet, und wobei sich die Greifeinrichtung 3 in der Transportkonfiguration der Hebeeinrichtung 4 in einer Transportposition zum Transport der Europoolpaletten 100.1, 100.2, 100.3 befindet. In der Transportposition befindet sich die Greifeinrichtung 3 weiter oben als in der Ladeposition. Die Greifeinrichtung 3 kann nach dem Ergreifen der Europoolpaletten 100.1, 100.2, 100.3 in der Greifkonfiguration zusammen mit den Europoolpaletten 100.1, 100.2, 100.3 durch Verstellen der Hebeeinrichtung 4 von der Ladekonfiguration in die Transportkonfiguration von der Ladeposition in die Transportposition angehoben werden.

In der Figur 1 ist die Transportvorrichtung 1 korrekt positioniert zum Ergreifen, Anheben und Transportieren von drei Europoolpaletten 100.1, 100.2, 100.3 gezeigt. Die Hebeeinrichtung 4 befindet sich in der Transportkonfiguration befindet, womit sich die Greifeinrichtung 3 in der Transportposition befindet.

In der Figur 2 ist die Transportvorrichtung 1 gleich wie in Figur 1 positioniert gezeigt. Allerdings befindet sich die Hebeeinrichtung 4 in der Ladekonfiguration, womit sich die Greifeinrichtung 3 in der Ladeposition befindet. Ausserdem befindet sich die Greifeinrichtung 3 in der Freigabekonfiguration und die drei Europoolpaletten 100.1, 100.2, 100.3 sind noch nicht ergriffen.

Die Greifeinrichtung 3 ist derart ausgebildet, dass in der Ladekonfiguration der Hebeeinrichtung 4 durch Verstellen der Greifeinrichtung 3 von der Freigabekonfiguration in die Greifkonfiguration beim Ergreifen der Europoolpaletten 100.1, 100.2, 100.3 die Europoolpaletten 100.1, 100.2, 100.3 nach oben angehoben werden. Dabei werden die Europoolpaletten 100.1, 100.2, 100.3 beim Ergreifen mit der Greifeinrichtung 3 durch Verstellen der Greifeinrichtung 3 von der Freigabekonfiguration in die Greifkonfiguration um etwa 1.5 cm angehoben. In einer Variante davon werden die Europoolpaletten 100.1, 100.2, 100.3 dabei um etwa 2.5 cm angehoben. In einer weiteren Variante davon werden die Europoolpaletten 100.1, 100.2, 100.3 dabei um etwa 3.5 cm oder noch mehr angehoben. Vorzugsweise werden die Europoolpaletten 100.1, 100.2, 100.3 dabei aber weniger als 20 cm, besonders bevorzugt weniger als 15 cm, ganz besonders weniger als 10 cm vom Boden angehoben. Dies ist in Figur 3 illustriert, wo sich wie bereits in Figur 2 gezeigt die Hebeeinrichtung 4 in der Ladekonfiguration und somit die Greifeinrichtung 3 in der Ladeposition befinden. Im Gegensatz zur Figur 2 ist in Figur 3 jedoch die Greifeinrichtung 3 in der Greifkonfiguration nach dem Ergreifen der Europoolpaletten 100.1, 100.2, 100.3. Wie in der Figur 3 dargestellt, sind die drei Europoolpaletten 100.1, 100.2, 100.3 angehoben und von der Greifeinrichtung 3 in der Greifkonfiguration gehalten.

Um die Greifeinrichtung 3 relativ zur Trageeinrichtung 2 von der Ladeposition in die Transportposition beim Verstellen der Hebeeinrichtung 4 von der Ladekonfiguration in die Transportkonfiguration anzuheben, umfasst die Transportvorrichtung 1 einen Hebeeinrichtungsantrieb 40. Im vorliegenden Beispiel handelt es sich um einen hydraulischen Hebeeinrichtungsantrieb. Es kann sich aber auch um einen anderen Hebeeinrichtungsantrieb wie beispielsweise einen elektrischen Hebeeinrichtungsantrieb handeln. Unabhängig von der Antriebsart dient der Hebeeinrichtungsantrieb 40 ausserdem dazu, um die Greifeinrichtung 3 relativ zur Trageeinrichtung 2 von der Transportposition in die Ladeposition beim Verstellen der Hebeeinrichtung 4 von der Transportkonfiguration in die Ladekonfiguration abzusenken.

In Figur 4 ist die Transportvorrichtung 1 mit der Hebeeinrichtung 4 in der Transportkonfiguration und somit mit der Greifeinrichtung 3 in der Transportposition gezeigt. Dabei befindet sich die Greifeinrichtung 3 in der Greifkonfiguration und hält die Europoolpaletten 100.1, 100.2, 100.3 für den Transport angehoben.

Um das Ergreifen der Europoolpaletten 100.1, 100.2, 100.3 zu vereinfachen, umfasst die Transportvorrichtung 1 einen hier nicht gezeigten Greifeinrichtungsantrieb zum Verstellen der beiden Greifeinheiten 30.1, 30.2 von der Freigabestellung in die Greifstellung und zurück beim Verstellen der Greifeinrichtung 3 von der Freigabekonfiguration in die Greifkonfiguration und zurück. Dabei handelt es sich um einen hydraulischen Greifeinrichtungsantrieb. Es kann sich dabei aber auch um einen elektrischen Greifeinrichtungsantrieb oder andersartigen Greifeinrichtungsantrieb handeln.

Die Figuren 5a und 5b sowie 6a und 6b zeigen je eine vereinfachte, schematische Frontalansicht der Transportvorrichtung 1. Dabei zeigen die Figuren 5a und 5b je eine erste Variante der Transportvorrichtung 1, während die Figuren 6a und 6b je eine zweite Variante der Transportvorrichtung 1 zeigen. In den Figuren 5a und 5b sowie 6a und 6b ist die jeweilige Transportvorrichtung 1 mit der Hebeeinrichtung 4 in der Ladekonfiguration und damit mit der Greifeinrichtung 3 in der Ladeposition gezeigt. In Figuren 5a und 6a ist die Greifeinrichtung 3 jeweils in der Freigabekonfiguration und in den Figuren 5b und 6b jeweils in der Greifkonfiguration mit von der Greifeinrichtung 3 ergriffenen Europoolpaletten 100.1, 100.2, 100.3 gezeigt.

Wie in den Figuren 5a, 5b und 6a, 6b zu erkennen ist, weisen die beiden Greifeinheiten 30.1, 30.2 je einen proximalen Bereich und einen distalen Bereich auf, wobei die beiden Greifeinheiten 30.1, 30.2 in ihrem distalen Bereich distale Greifabschnitte 31.1, 31.2, zum Ergreifen der Europoolpaletten 100.1, 100.2, 100.3 aufweisen, wobei ein Abstand zwischen den distalen Greifabschnitten 31.1 einer ersten der beiden Greifeinheiten 30.1 und den distalen Greifabschnitten 31.2 einer zweiten der beiden Greifeinheiten 30.2 in der Freigabekonfiguration der Greifeinrichtung 3 grösser als in der Greifkonfiguration der Greifeinrichtung 3 ist. Dabei sind die beiden Greifeinheiten 30.1, 30.2 in der Greifkonfiguration der Greifeinrichtung 3 der Greifeinrichtung 3 mit ihren distalen Bereichen einander zu gewandt und mit ihren proximalen Bereichen voneinander abgewandt ausgerichtet. In der zweiten Variante der Transportvorrichtung 1, welche in den Figuren 6a und 6b gezeigt ist, sind die beiden Greifeinheiten 30.1, 30.2 zudem auch in der Freigabekonfiguration der Greifeinrichtung 3 mit ihren distalen Bereichen einander zu gewandt und mit ihren proximalen Bereichen voneinander abgewandt ausgerichtet.

Die distalen Greifabschnitte 31.1, 31.2 bilden Eingriffselemente 34.1, ..., 34.7 zum Ergreifen der Europoolpaletten 100.1, 100.2, 100.3 und können mit den Aufnahmevertiefungen der Europoolpaletten 100.1, 100.2, 100.3 in Eingriff gebracht werden. Dabei greifen die distalen Greifabschnitte 31.1, 31.2 in der Greifstellung der Greifeinheiten 30.1, 30.2 bei ergriffenen Europoolpaletten 100.1, 100.2, 100.3 in die Aufnahmevertiefungen der Europoolpaletten 100.1, 100.2, 100.3 ein. Damit können die Europoolpaletten 100.1, 100.2, 100.3 ergriffen, angehoben und gehalten werden.

In den Figuren 1 bis 4 ist zu erkennen, dass im vorliegenden Fall die beiden Greifeinheiten 30.1, 30.2 je sechs distale Greifabschnitte 31.1, 31.2 aufweisen, welche von einem horizontalen Balken etwas nach unten abstehen und die Eingriffselemente 34.1, ..., 34.7 bilden.

Die distalen Greifabschnitte 31.1, 31.2 der beiden Greifeinheiten 30.1, 30.2 weisen je einen distalen Oberflächenbereich 32.1, 32.2 auf, welcher in der Greifstellung der Greifeinheiten 30.1, 30.1 zum Kontaktieren und Halten der Europoolpaletten 100.1, 100.2, 100.3 nach oben gewandt und horizontal ausgerichtet ist. Die distalen Greifabschnitte 31.1, 31.2 der beiden Greifeinheiten 30.1, 30.2 weisen ausserdem je einen nach oben gewandten, proximalen Oberflächenbereich 33.1, 33.2 auf, welcher auf proximaler Seite des distalen Oberflächenbereichs 32.1, 32.2 des jeweiligen distalen Greifabschnitts 31.1, 31.2 angeordnet ist. In der in der Greifstellung der Greifeinheiten 30.1, 30.2 steigen die proximalen Oberflächenbereiche 33.1, 33.2 jeweils ausgehend vom distalen Oberflächenbereich 32.1, 32.2 des jeweiligen distalen Greifabschnitts 31.1, 31.2 in proximale Richtung vom jeweiligen distalen Oberflächenbereich 32.1, 32.2 weg nach oben an.

Zum Ergreifen der Europoolpaletten 100.1, 100.2, 100.3 befinden sich die Europoolpaletten 100.1, 100.2, 100.3 wie in den Figuren 5a und 6a illustriert zwischen den beiden Greifeinheiten 30.1, 30.2. Hierzu kann die Transportvorrichtung 1 über die Europoolpaletten 100.1, 100.2, 100.3 bewegt werden, damit sich die Europoolpaletten 100.1, 100.2, 100.3 zwischen den beiden Greifeinheiten 30.1, 30.2 befindet und die Transportvorrichtung 1 für das Ergreifen der Europoolpaletten 100.1, 100.2, 100.3 korrekt positioniert ist.

Die Greifeinrichtung 3 ist für das Ergreifen der Europoolpaletten 100.1, 100.2, 100.3 optimiert. In der Greifkonfiguration der Greifeinrichtung 3 sind die Greifeinheiten 30.1, 30.2 derart positioniert, dass paarweise einer der distalen Greifabschnitte 31.1 der ersten der beiden Greifeinheiten 30.1 einem der distalen Greifabschnitte 31.2 der zweiten der beiden Greifeinheiten 30.2 gegenüberliegt, wobei die proximalen Oberflächenbereiche 33.1, 33.2 der paarweise sich gegenüberliegenden distalen Greifabschnitte 31.1, 31.2 einen Abstand zueinander aufweisen, welcher um 2 cm grösser als eine Breite der Europoolpaletten 100.1, 100.2, 100.3 ist, sodass in der Greifkonfiguration der Greifeinrichtung 2 bei ergriffenen Europoolpaletten 100.1, 100.2, 100.3 die Europoolpaletten 100.1, 100.2, 100.3 auf den distalen Oberflächenbereichen 32.1, 3.2 der paarweise sich gegenüberliegenden distalen Greifabschnitte 31.1, 31.2 aufliegt, während sich die proximalen Oberflächenbereiche 33.1, 33.2 der paarweise sich gegenüberliegenden distalen Greifabschnitte 31.1, 31.2 gerade ausserhalb der Europoolpaletten 100.1, 100.2, 100.3 befinden.

Die Transportvorrichtung 1 ist dazu eingerichtet, um nach einem Transport der Europoolpaletten 100.1, 100.2, 100.3 die Europoolpaletten 100.1, 100.2, 100.3 abzusetzen.

In einer ersten Variante davon kann die Greifeinrichtung 3 zusammen mit den Europoolpaletten 100.1, 100.2, 100.3 durch Verstellen der Hebeeinrichtung 4 von der Transportkonfiguration in die Ladekonfiguration von der Transportposition in die Ladeposition abgesenkt werden. Danach wird die Greifeinrichtung 3 zum Freigeben der Europoolpaletten 100.1, 100.2, 100.3 und damit zum Absetzen der Europoolpaletten 100.1, 100.2, 100.3 von der Greifkonfiguration in eine Freigabekonfiguration verstellt. Bei diesem Freigeben der Europoolpaletten 100.1, 100.2, 100.3 befindet sich die Hebeeinrichtung 4 in der Ladekonfiguration und die Greifeinrichtung 3 entsprechend in der Ladeposition.

In einer zweiten Variante davon weist die Hebeeinrichtung 4 eine hier nicht gezeigte Entladel<onfiguration auf, in welcher sich die Greifeinrichtung 3 in einer Entladeposition befindet, in welcher sich die Greifeinrichtung 3 weiter unten als in der Ladeposition befindet. Dadurch können die Europoolpaletten 100.1, 100.2, 100.3 alleine durch Verstellen der Hebeeinrichtung 4 von der Transportkonfiguration in die Entladel<onfiguration abgesetzt werden, während sich die Greifeinrichtung 3 in der Greifkonfiguration befindet. In dieser Variante kann die Greifeinrichtung 3 in der Entladel<onfiguration der Hebeeinrichtung 4 und damit in ihrer Entladeposition von der Greifkonfiguration in die Freigabekonfiguration verstellt werden, um die Europoolpaletten 100.1, 100.2, 100.3 freizugeben.

In der ersten Variante der Transportvorrichtung 1, welche in den Figuren 5a und 5b gezeigt ist, sind die Greifeinheiten 30.1, 30.2 zum Verstellen von der Freigabestellung in die Greifstellung und zurück je um eine Achse 5.1, 5.2 schwenkbar. Diese Achsen 5.1, 5.2 sind parallel zueinander ausgerichtet. Zudem sind sie im Wesentlichen horizontal ausgerichtet. Zum Verstellen der beiden Greifeinheiten 30.1, 30.2 von der Freigabestellung in die Greifstellung zum Ergreifen der Europoolpaletten 100.1, 100.2, 100.3 werden die distalen Greifabschnitte 31.1, 31.2 der Greifeinheiten 30.1, 30.2 um die Achsen 5.1, 5.2 von unten nach oben geschwenkt, bis sich die Greifeinheiten 30.1, 30.2 in der Greifstellung befinden, um in der Ladekonfiguration der Hebeeinrichtung 4 durch Verstellen der Greifeinrichtung 3 von der Freigabekonfiguration in die Greifkonfiguration zum Ergreifen der Europoolpaletten 100.1, 100.2, 100.3 die Europoolpaletten 100.1, 100.2, 100.3 nach oben anzuheben.

In der zweiten Variante der Transportvorrichtung 1, welche in den Figuren 6a und 6b gezeigt ist, sind die beiden Greifeinheiten 30.1, 30.2 zum Verstellen von der Freigabestellung in die Greifstellung und zurück je entlang einem Verstellweg verschiebbar gelagert. Dabei weisen die Verstellwege der beiden Greifeinheiten 30.1, 30.2 je eine horizontale Komponente auf. Ausserdem weisen die Verstellwege der beiden Greifeinheiten 30.1, 30.2 je in einem unmittelbar an die Greifstellung anschliessenden Bereich des Verstellwegs eine vertikale Komponente auf, wobei die beiden Greifeinheiten 30.1, 30.2 beim Verstellen von der Freigabestellung in die Greifstellung aufgrund der vertikalen Komponente der Verstellwege je nach oben in die Greifstellung bewegt werden, um in der Ladekonfiguration der Hebeeinrichtung 4 durch Verstellen der Greifeinrichtung 3 von der Freigabekonfiguration in die Greifkonfiguration zum Ergreifen der Europoolpaletten 100.1, 100.2, 100.3 die Europoolpaletten 100.1, 100.2, 100.3 nach oben anzuheben.

Figuren 7a und 8a zeigen je eine vereinfachte schematische Seitenansicht einer weiteren erfindungsgemässen Transportvorrichtung 50 zum Transport von drei leeren oder beladenen Europoolpaletten. Figuren 7b und 8b hingegen je zeigen eine vereinfachte, schematische Frontalansicht dieser Transportvorrichtung 50.

Die in Figuren 7a, 7b, 8a und 8b gezeigte Transportvorrichtung 50 weist die gleichen Elemente wie die in den Figuren 1 bis 6b gezeigte Transportvorrichtung 1 auf und kann entsprechend in der in den Figuren 5a und 5b gezeigten ersten Variante oder in der in den Figuren 6a und 6b gezeigten zweiten Variante vorliegen. Dies, auch wenn der Einfachheit halber in der Figur 8b nur die in den Figuren 5a und 5b gezeigte erste Variante dargestellt ist.

Die in den Figuren 7a, 7b, 8a und 8b gezeigte Transportvorrichtung 50 weist zusätzlich eine Abschrankung 51 zum Schutz der Europoolpaletten beim Transport der Europoolpaletten auf, wobei die Abschrankung 51 wie in Figuren 7a und 7b illustriert in einer aktiven Stellung in der Transportkonfiguration der Hebeeinrichtung 4 bei von der Greifeinrichtung 3 ergriffenen Europoolpaletten die Europoolpaletten auf alle vier Seiten umgreift. Dadurch können die Europoolpaletten optimal von Ausseneinwirl<ungen geschützt transportiert werden. Ausserdem wird dadurch verhindert, dass die Europoolpaletten aufgrund von ruckartigen Bewegungen der Transportvorrichtung während dem Transport verloren gehen können. Im vorliegenden Beispiel ist die Abschrankung 51 eine Abdeckung, welche in der Transportkonfiguration der Hebeeinrichtung 4 bei von der Greifeinrichtung 3 ergriffenen Europoolpaletten die Europoolpaletten auf alle vier Seiten abdeckt. In einer Variante davon handelt es sich bei der Abschrankung 51 jedoch nicht um eine Abdeckung, sondern um eine Abschrankung, welche Ausnehmungen aufweist. Beispielsweise kann die Abschrankung durch ein Gatter gebildet sein.

Die Abschrankung 51 ist wie in Figuren 8a und 8b illustriert von ihrer aktiven Stellung in eine deaktive Stellung verstellbar, in welcher die Abschrankung 51 in der Transportkonfiguration der Hebeeinrichtung 4 bei von der Greifeinrichtung 3 ergriffenen Europoolpaletten die Europoolpaletten auf gar keiner Seite mehr umgreift. Hierzu ist die Abschrankung 51 ausgehend von ihrer aktiven Stellung in zwei Teilen 52.1, 52.2 auf zwei gegenüberliegende Seiten in die deaktive Stellung wegschwenkbar, wobei die beiden Teile 52.1, 52.2 je um eine horizontal ausgerichtete Schwenkachse 53.1, 53.2 schwenkbar sind, wobei die Schwenkachsen 53.1, 53. in einem oberen Bereich der Abschrankung 51 angeordnet sind. Durch die deaktive Stellung der Abschrankung 51 wird den Europoolpaletten Freiraum gegeben. Zudem wird dadurch im Bedarfsfall in der Transportkonfiguration der Hebeeinrichtung 4 bei von der Greifeinrichtung 3 ergriffenen Europoolpaletten ein Zugang zu den Europoolpaletten und der allenfalls darauf gestapelten Ware ermöglicht oder erleichtert.

Die Erfindung ist nicht auf die vorgehend beschriebenen Ausführungsvarianten beschränkt. Beispielsweise kann die Transportvorrichtung auch zum gleichzeitigen Transport von nur zwei oder nur einer Europoolpalette ausgebildet sein. Genauso kann die Transportvorrichtung aber auch zum gleichzeitigen Transport von vier oder mehr Europoolpaletten ausgebildet sein. Die Transportvorrichtung kann auch zum Transport von anderen Transportpaletten als Europoolpaletten ausgebildet sein. Auch kann die Transportvorrichtung zum Transport von einem anderen Transportgut als Transportpaletten ausgebildet sein. So kann die Transportvorrichtung beispielweise zum Transport von Körben, Kosten oder dergleichen ausgebildet sein.

Zusammenfassend ist festzustellen, dass eine Transportvorrichtung zum Transport eines Transportguts bereitgestellt wird, welche ein sicheres und das Transportgut schonendes Ergreifen des Transportguts sowie ein sicheres Halten des Transportguts ermöglicht, wobei gleichzeitig zuverlässig eine optimale Positionierung des Transportguts für den Transport ermöglicht werden kann.

## Patentansprüche

1. Transportvorrichtung (1, 50) zum Transport von Transportgut (100.1, 100.2, 100.3), insbesondere leeren oder beladenen Transportpaletten wie Europoolpaletten, umfassend:
a) eine Trageeinrichtung (2), welche wenigstens zwei Räder (20.1, 20.2, 20.3) umfasst, auf welchen die Transportvorrichtung (1, 50) von einem Ort an einen anderen Ort bewegt werden kann,
b) eine Greifeinrichtung (3) zum Ergreifen des Transportguts (100.1, 100.2, 100.3), wobei die Greifeinrichtung (3) eine Freigabekonfiguration und eine Greifkonfiguration aufweist und zum Ergreifen des Transportguts (100.1, 100.2, 100.3) von der Freigabekonfiguration in die Greifkonfiguration verstellbar ist, wobei die Greifeinrichtung (3) zwei beabstandete, sich gegenüberliegende Greifeinheiten (30.1, 30.2) zum Ergreifen des Transportguts (100.1, 100.2, 100.3) umfasst, wobei sich die beiden Greifeinheiten (30.1, 30.2) in der Freigabekonfiguration der Greifeinrichtung (3) in einer Freigabestellung und in der Greifkonfiguration der Greifeinrichtung (3) in einer Greifstellung befinden, wobei die beiden Greifeinheiten (30.1, 30.2) zum Verstellen der Greifeinrichtung (3) von der Freigabekonfiguration in die Greifkonfiguration beim Ergreifen des Transportguts (100.1, 100.2, 100.3) relativ zueinander von der Freigabestellung in die Greifstellung bewegbar sind,
c) eine an der Trageeinrichtung (2) angeordnete Hebeeinrichtung (4) zum Anheben und Absenken der Greifeinrichtung (3) relativ zur Trageeinrichtung (2), wobei die Hebeeinrichtung (4) eine Ladekonfiguration und eine Transportkonfiguration aufweist, wobei sich die Greifeinrichtung (3) in der Ladekonfiguration der Hebeeinrichtung (4) in einer Ladeposition zum Ergreifen des Transportguts (100.1, 100.2, 100.3) durch verstellen der Greifeinrichtung (3) von der Freigabekonfiguration in die Greifkonfiguration befindet, und wobei sich die Greifeinrichtung (3) in der Transportkonfiguration der Hebeeinrichtung (4) in einer Transportposition zum Transport des Transportguts (100.1, 100.2, 100.3) befindet,
wobei sich die Greifeinrichtung (3) in der Transportposition weiter oben als in der Ladeposition befindet und wobei die Greifeinrichtung (3) nach dem Ergreifen des Transportguts (100.1, 100.2, 100.3) in der Greifkonfiguration zusammen mit dem Transportgut (100.1, 100.2, 100.3) durch Verstellen der Hebeeinrichtung (4) von der Ladekonfiguration in die Transportkonfiguration von der Ladeposition in die Transportposition anhebbar ist,
**dadurch gekennzeichnet, dass** die Greifeinrichtung (3) derart ausgebildet ist, dass in der Ladekonfiguration der Hebeeinrichtung (4) durch Verstellen der Greifeinrichtung (3) von der Freigabekonfiguration in die Greifkonfiguration beim Ergreifen des Transportguts (100.1, 100.2, 100.3) das Transportgut (100.1, 100.2, 100.3) nach oben angehoben wird.

2. Transportvorrichtung (1, 50) nach Anspruch 1, **gekennzeichnet durch** einen Hebeeinrichtungsantrieb (40), insbesondere einen hydraulischen Hebeeinrichtungsantrieb oder einen elektrischen Hebeeinrichtungsantrieb, zum Antreiben der Hebeeinrichtung (4) zum Anheben der Greifeinrichtung (3) relativ zur Trageeinrichtung (2) von der Ladeposition in die Transportposition beim Verstellen der Hebeeinrichtung (4) von der Ladekonfiguration in die Transportkonfiguration.

3. Transportvorrichtung (1, 50) nach Anspruch 1 oder 2, **gekennzeichnet durch** einen Greifeinrichtungsantrieb, insbesondere einen hydraulischen Greifeinrichtungsantrieb oder einen elektrischen Greifeinrichtungsantrieb, zum Verstellen der beiden Greifeinheiten (30.1, 30.2) von der Freigabestellung in die Greifstellung und zurück beim Verstellen der Greifeinrichtung (3) von der Freigabekonfiguration in die Greifkonfiguration und zurück.

4. Transportvorrichtung (1, 50) nach einem der Ansprüche 1 bis 3, **dadurch gekennzeichnet, dass** die beiden Greifeinheiten (30.1, 30.2) je einen proximalen Bereich und einen distalen Bereich aufweisen, wobei die beiden Greifeinheiten (30.1, 30.2) in ihrem distalen Bereich je wenigstens einen distalen Greifabschnitt (31.1, 31.2) zum Ergreifen des Transportguts (100.1, 100.2, 100.3) aufweisen, wobei ein Abstand zwischen dem wenigstens einen distalen Greifabschnitt (31.1) einer ersten der beiden Greifeinheiten (30.1) und dem wenigstens einen distalen Greifabschnitt (31.2) einer zweiten der beiden Greifeinheiten (30.2) in der Freigabekonfiguration der Greifeinrichtung (3) grösser als in der Greifkonfiguration der Greifeinrichtung (3) ist.

5. Transportvorrichtung (1, 50) nach Anspruch 4, **dadurch gekennzeichnet, dass** die wenigstens einen distalen Greifabschnitte (31.1, 31.2) der beiden Greifeinheiten (30.1, 30.2) je einen distalen Oberflächenbereich (32.1, 32.2) aufweisen, welcher in der Greifstellung der Greifeinheiten (30.1, 30.2) zum Kontaktieren und Halten des Transportguts (100.1, 100.2, 100.3) nach oben gewandt und im Wesentlichen horizontal ausgerichtet ist.

6. Transportvorrichtung (1, 50) nach Anspruch 5, **dadurch gekennzeichnet, dass** die wenigstens einen distalen Greifabschnitte (31.1, 31.2) der beiden Greifeinheiten je einen nach oben gewandten, proximalen Oberflächenbereich (33.1, 33.2) aufweisen, welcher auf proximaler Seite des distalen Oberflächenbereichs (32.1, 32.2) des jeweiligen wenigstens einen distalen Greifabschnitts (31.1, 31.2) angeordnet ist, wobei in der Greifstellung der Greifeinheiten (30.1, 30.2) die proximalen Oberflächenbereiche (33.1, 33.2) jeweils ausgehend vom distalen Oberflächenbereich (32.1, 32.2) des jeweiligen wenigstens einen distalen Greifabschnitts (31.1, 31.2) in proximale Richtung vom jeweiligen distalen Oberflächenbereich (32.1, 32.2) weg nach oben ansteigen.

7. Transportvorrichtung (1, 50) nach einem der Ansprüche 1 bis 6, **dadurch gekennzeichnet, dass** die beiden Greifeinheiten (30.1, 30.2) zum Verstellen von der Freigabestellung in die Greifstellung und zurück je entlang einem Verstellweg verschiebbar gelagert sind.

8. Transportvorrichtung (1, 50) nach Anspruch 7, **dadurch gekennzeichnet, dass** die Verstellwege der beiden Greifeinheiten (30.1, 30.2) je eine horizontale Komponente aufweisen.

9. Transportvorrichtung (1, 50) nach Anspruch 7 oder 8, **dadurch gekennzeichnet, dass** die Verstellwege der beiden Greifeinheiten (30.1, 30.2) je in einem unmittelbar an die Greifstellung anschliessenden Bereich des Verstellwegs eine vertikale Komponente aufweisen, wobei die beiden Greifeinheiten (30.1, 30.2) beim Verstellen von der Freigabestellung in die Greifstellung aufgrund der vertikalen Komponente der Verstellwege je nach oben in die Greifstellung bewegt werden, um in der Ladekonfiguration der Hebeeinrichtung (4) durch Verstellen der Greifeinrichtung (3) von der Freigabekonfiguration in die Greifkonfiguration zum Ergreifen des Transportguts (100.1, 100.2, 100.3) das Transportgut (100.1, 100.2, 100.3) nach oben anzuheben.

10. Transportvorrichtung (1, 50) nach einem der Ansprüche 1 bis 6, **dadurch gekennzeichnet, dass** die Greifeinheiten (30.1, 30.2) zum Verstellen von der Freigabestellung in die Greifstellung und zurück je um eine Achse (5.1, 5.2) schwenkbar sind.

11. Transportvorrichtung nach Anspruch 10, **dadurch gekennzeichnet, dass** die Achsen (5.1, 5.2) parallel zueinander ausgerichtet sind.

12. Transportvorrichtung nach Anspruch 10 oder 11, **dadurch gekennzeichnet, dass** die Achsen (5.1, 5.2) im Wesentlichen horizontal ausgerichtet sind.

13. Transportvorrichtung (1, 50) nach einem der Ansprüche 4 bis 6 sowie nach Anspruch 12, **dadurch gekennzeichnet, dass** zum Verstellen der beiden Greifeinheiten (30.1, 30.2) von der Freigabestellung in die Greifstellung zum Ergreifen des Transportguts (100.1, 100.2, 100.3) die wenigstens einen distalen Greifabschnitte (31.1, 31.2) der Greifeinheiten (30.1, 30.2) um die Achsen (5.1, 5.2) von unten nach oben schwenkbar sind, bis sich die Greifeinheiten (30.1, 30.2) in der Greifstellung befinden, um in der Ladekonfiguration der Hebeeinrichtung (4) durch Verstellen der Greifeinrichtung (3) von der Freigabekonfiguration in die Greifkonfiguration zum Ergreifen des Transportguts (100.1, 100.2, 100.3) das Transportgut (100.1, 100.2, 100.3) nach oben anzuheben.

14. Transportvorrichtung (50) nach einem der Ansprüche 1 bis 13, **dadurch gekennzeichnet, dass** die Transportvorrichtung (50) eine Abschrankung (51) zum Schutz des Transportguts (100.1, 100.2, 100.3) beim Transport des Transportguts (100.1, 100.2, 100.3) aufweist, wobei die Abschrankung (51) in einer aktiven Stellung in der Transportkonfiguration der Hebeeinrichtung (4) bei von der Greifeinrichtung (3) ergriffenem Transportgut (100.1, 100.2, 100.3) das Transportgut (100.1, 100.2, 100.3) auf alle vier Seiten umgreift.

15. Transportvorrichtung (50) nach Anspruch 14, **dadurch gekennzeichnet, dass** die Abschrankung (51) ausgehend von ihrer aktiven Stellung in zwei Teilen (52.1, 52.2) auf zwei gegenüberliegende Seiten in eine deaktive Stellung wegschwenkbar ist, wobei die beiden Teile (52.1, 52.2) je um eine vorzugsweise horizontal ausgerichtete Schwenkachse (53.1, 53.2) schwenkbar sind, wobei die vorzugsweise horizontal ausgerichteten Schwenkachsen (53.1, 53.2) insbesondere in einem oberen Bereich der Abschrankung (51) angeordnet sind.

16. Transportvorrichtung (1, 50) nach einem der Ansprüche 1 bis 15, **dadurch gekennzeichnet, dass** die Transportvorrichtung (1, 50) ein Anhänger für ein motorisiertes Fahrzeug oder ein motorisiertes Fahrzeug ist.

## Claims

1. Transport device (1, 50) for transporting transport goods (100.1, 100.2, 100.3), in particular empty or loaded transport pallets such as Euro pallets, comprising:
a) a carrying device (2), comprising at least two wheels (20.1, 20.2, 20.3), on which wheels the transport device (1, 50) can be moved from one place to another place,
b) a gripping device (3) for gripping the transport goods (100.1, 100.2, 100.3), the gripping device (3) having a release configuration and a gripping configuration and being adjustable from the release configuration to the gripping configuration for gripping the transport goods (100.1, 100.2, 100.3), the gripping device (3) comprising two gripping units (30.1, 30.2) for gripping the transport goods (100.1, 100.2, 100.3), the gripping units (30.1, 30.2) being spaced apart and opposing each other, wherein the gripping units (30.1, 30.2) are in a release position in the release configuration of the gripping device (3) and in a gripping position in the gripping configuration of the gripping device (3), wherein the two gripping units (30.1, 30.2) are movable relative to one another from the release position into the gripping position for adjusting the gripping device (3) from the release configuration to the gripping configuration for gripping the transport goods (100.1, 100.2, 100.3),
c) a lifting device (4) arranged on the carrying device (2) for raising and lowering the gripping device (3) relative to the carrying device (2), wherein the lifting device (4) has a loading configuration and a transport configuration, wherein the gripping device (3) in the loading configuration of the lifting device (4) is in a loading position for gripping the transport goods (100. 1, 100.2, 100.3) by adjusting the gripping device (3) from the release configuration to the gripping configuration, and wherein the gripping device (3) is in a transport position for transporting the transport goods (100.1, 100.2, 100.3) in the transport configuration of the lifting device (4),
where in the transport position the gripping device (3) is located further up than in the loading position, and wherein the gripping device (3), after gripping the transport goods (100.1, 100.2, 100.3) in the gripping configuration, can be lifted together with the transport goods (100.1, 100.2, 100.3) from the loading position into the transport position by adjusting the lifting device (4) from the loading configuration into the transport configuration,
**characterized in that** the gripping device (3) is designed in such a way that, in the loading configuration of the lifting device (4), by adjusting the gripping device (3) from the release configuration into the gripping configuration, during the gripping of the transport goods (100.1, 100.2, 100.3), the transport goods (100.1, 100.2, 100.3) are lifted upwards.

2. Transport device (1, 50) according to claim 1, **characterized by** a lifting device drive (40), in particular a hydraulic lifting device drive or an electric lifting device drive, for driving the lifting device (4) for lifting the gripping device (3) relative to the carrying device (2) from the loading position to the transport position when adjusting the lifting device (4) from the loading configuration to the transport configuration.

3. Transport device (1, 50) according to claim 1 or 2, **characterized by** a gripping device drive, in particular a hydraulic gripping device drive or an electric gripping device drive, for adjusting the two gripping units (30.1, 30.2) from the release position to the gripping position and back when adjusting the gripping device (3) from the release configuration to the gripping configuration and back.

4. Transport device (1, 50) according to one of claims 1 to 3, **characterized in that** the two gripping units (30.1, 30.2) each have a proximal region and a distal region, the two gripping units (30.1, 30.2) each having in their distal region at least one distal gripping section (31.1, 31.2) for gripping the transport goods (100.1, 100. 2, 100.3), wherein a distance between the at least one distal gripping section (31.1) of a first of the two gripping units (30.1) and the at least one distal gripping section (31.2) of a second of the two gripping units (30.2) is greater in the release configuration of the gripping device (3) than in the gripping configuration of the gripping device (3).

5. Transport device (1, 50) according to claim 4, **characterized in that** the at least one distal gripping sections (31.1, 31.2) of the two gripping units (30.1, 30.2) each have a distal surface region (32.1, 32.2) which, in the gripping position of the gripping units (30.1, 30.2) for contacting and holding the transport goods (100.1, 100.2, 100.3), faces upwards and is oriented essentially horizontally.

6. Transport device (1, 50) according to claim 5, **characterized in that** the at least one distal gripping sections (31.1, 31.2) of the two gripping units each have an upwardly facing proximal surface region (33.1, 33.2) which is arranged on the proximal side of the distal surface region (32.1, 32.2) of the respective at least one distal gripping section (31. 1, 31.2), wherein, in the gripping position of the gripping units (30.1, 30.2), the proximal surface regions (33.1, 33.2) each rise upwards in the proximal direction away from the respective distal surface region (32.1, 32.2), starting from the distal surface region (32.1, 32.2) of the respective at least one distal gripping section (31.1, 31.2).

7. Transport device (1, 50) according to one of claims 1 to 6, **characterized in that** the two gripping units (30.1, 30.2) are each mounted displaceably along an adjustment path for adjustment from the release position into the gripping position and back.

8. Transport device (1, 50) according to claim 7, **characterized in that** the adjustment paths of the two gripping units (30.1, 30.2) each have a horizontal component.

9. Transport device (1, 50) according to claim 7 or 8, **characterized in that** the adjustment paths of the two gripping units (30.1, 30.2) each have a vertical component in a region of the adjustment path directly adjoining the gripping position, wherein the two gripping units (30.1, 30. 2) are each moved upwards into the gripping position during adjustment from the release position into the gripping position on account of the vertical component of the adjustment paths, in order to lift the transport goods (100.1, 100.2, 100.3) upwards in the loading configuration of the lifting device (4) by adjusting the gripping device (3) from the release configuration into the gripping configuration for gripping the transport goods (100.1, 100.2, 100.3).

10. Transport device (1, 50) according to one of claims 1 to 6, **characterized in that** the gripping units (30.1, 30.2) can each be pivoted about an axis (5.1, 5.2) for adjustment from the release position to the gripping position and back.

11. Transport device according to claim 10, **characterized in that** the axes (5.1, 5.2) are aligned parallel to each other.

12. Transport device according to claim 10 or 11, **characterized in that** the axes (5.1, 5.2) are aligned substantially horizontally.

13. Transport device (1, 50) according to one of the claims 4 to 6 as well as claim 12, **characterized in that** for moving the two gripping units (30.1, 30.2) from the release position into the gripping position for gripping the transported good (100.1, 100.2, 100.3), the at least one distal gripping sections (31.1, 31.2) of the gripping units (30.1, 30.2) can be pivoted about the axes (5. 1, 5.2) upwards from below until the gripping units (30.1, 30.2) are in the gripping position, in order to lift the transport goods (100.1, 100.2, 100.3) upwards in the loading configuration of the lifting device (4) by adjusting the gripping device (3) from the release configuration into the gripping configuration for gripping the transport goods (100.1, 100.2, 100.3).

14. Transport device (50) according to one of claims 1 to 13, **characterized in that** the transport device (50) has a barrier (51) for protecting the transport goods (100.1, 100.2, 100.3) during transport of the transport goods (100.1, 100.2, 100. 3), wherein the barrier (51), in an active position in the transport configuration of the lifting device (4), engages around the transport goods (100.1, 100.2, 100.3) to be transported on all four sides when the gripping device (3) grips the transport goods (100.1, 100.2, 100.3).

15. Transport device (50) according to claim 14, **characterized in that** the barrier (51), starting from its active position, can be pivoted away in two parts (52.1, 52.2) on two opposite sides into a disabled position, the two parts (52.1, 52.2) each being pivotable about a preferably horizontally aligned pivot axis (53.1, 53.2), the preferably horizontally aligned pivot axes (53.1, 53.2) being arranged in particular in an upper region of the barrier (51).

16. Transport device (1, 50) according to any one of claims 1 to 15, **characterized in that** the transport device (1, 50) is a trailer for a motorized vehicle or is a motorized vehicle.

## Revendications

1. Dispositif de transport (1, 50), pour le transport de produits à transporter (100.1, 100.2, 100.3), notamment de palettes de transport vides ou chargées, telles que des euro-palettes, comprenant:
a) un système porteur (2), lequel comprend au moins deux roues (20.1, 20.2, 20.3), sur lesquelles le dispositif de transport (1, 50) peut être déplacé d'un lieu vers un autre lieu,
b) un système de préhension (3), destiné à saisir le produit à transporter (100.1, 100.2, 100.3), le système de préhension (3) comportant une configuration de libération et une configuration de préhension et pour saisir le produit à transporter (100.1, 100.2, 100.3) étant réglable de la configuration de libération dans la configuration de préhension, le système de préhension (3) comprenant deux unités de préhension (30.1, 30.2) écartées, mutuellement opposées, destinées à saisir le produit à transporter (100.1, 100.2, 100.3), dans la configuration de libération du système de préhension (3), les deux unités de préhension (30. 1, 30.2) se trouvant dans une position de libération et dans la configuration de préhension du système de préhension (3) se trouvant dans une position de préhension, pour régler le système de préhension (3) de la configuration de libération dans la configuration de préhension, lors de la saisie du produit à transporter (100.1, 100.2, 100.3), les deux unités de préhension (30.1, 30.2) étant déplaçables l'une par rapport à l'autre de la position de libération dans la position de préhension,
c) un système de levage (4) placé sur le système porteur (2), destiné à relever et à abaisser le système de préhension (3) par rapport au système porteur (2), le système de levage (4) comportant une configuration de chargement et une configuration de transport, dans la configuration de chargement du système de levage (4), le système de préhension (3) se trouvant dans une position de chargement pour saisir le produit à transporter (100.1, 100.2, 100.3) par réglage du système de préhension (3) de la configuration de libération dans la configuration de préhension, et dans la configuration de transport du système de levage (4), le système de préhension (3) se trouvant dans une position de transport pour le transport du produit à transporter (100. 1, 100.2, 100.3),
dans la position de transport, le système de préhension (3) étant placé plus haut que dans la position de chargement et après avoir saisi le produit à transporter (100.1, 100.2, 100.3), dans la configuration de préhension, le système de préhension (3) étant relevable conjointement avec le produit à transporter (100.1, 100.2, 100.3) de la position de chargement dans la position de transport, par réglage du système de levage (4) de la configuration de chargement dans la configuration de transport,
**caractérisé en ce que** le système de préhension (3) est conçu de telle sorte, que dans la configuration de chargement du système de levage (4), par réglage du système de préhension (3) de la configuration de libération dans la configuration de préhension lors de la saisie du produit à transporter (100.1, 100.2, 100.3), le produit à transporter (100.1, 100.2, 100.3) soit relevé vers le haut.

2. Dispositif de transport (1, 50) selon la revendication 1, **caractérisé par** un entraînement (40) du système de levage, notamment un entraînement hydraulique du système de levage ou un entraînement électrique du système de levage, destiné à entraîner le système de levage (4), pour relever le système de préhension (3) par rapport au système porteur (2) de la position de chargement dans la position de transport, lors du réglage du système de levage (4) de la configuration de chargement dans la configuration de transport.

3. Dispositif de transport (1, 50) selon la revendication 1 ou 2, **caractérisé par** un entraînement du système de préhension, notamment un entraînement hydraulique du système de préhension ou un entraînement électrique du système de préhension, pour régler les deux unités de préhension (30.1, 30.2) de la position de libération dans la position de préhension et en retour, lors du réglage du système de préhension (3) de la configuration de libération dans la configuration de préhension et retour.

4. Dispositif de transport (1, 50) selon l'une quelconque des revendications 1 à 3, **caractérisé en ce que** les deux unités de préhension (30.1, 30.2) comportent chacune une zone proximale et une zone distale, les deux unités de préhension (30.1, 30.2) comportant dans leur zone distale au moins une section de préhension (31.1, 31.2) distale, pour saisir le produit à transporter (100.1, 100.2, 100.3), dans la configuration de libération du système de préhension (3), un écart entre l'au moins une section de préhension (31.1) distale d'une première des deux unités de préhension (30. 1) et l'au moins une section de préhension (31.2) distale d'une deuxième des deux unités de préhension (30.2) étant supérieur à celui dans la configuration de préhension du système de préhension (3).

5. Dispositif de transport (1, 50) selon la revendication 4, **caractérisé en ce que** les au moins une sections de préhension (31.1, 31.2) distales des deux unités de préhension (30.1, 30.2) comportent chacune une zone superficielle (32.1, 32.2) distale, laquelle dans la position de préhension des unités de préhension (30.1, 30.2), pour entrer en contact avec le produit à transporter (100.1, 100.2, 100.3) et le maintenir est tournée vers le haut et orientée sensiblement à l'horizontale.

6. Dispositif de transport (1, 50) selon la revendication 5, **caractérisé en ce que** les au moins une sections de préhension (31.1, 31.2) distales des deux unités de préhension comportent chacune une zone superficielle (33.1, 33.2) proximale, tournée vers le haut, laquelle est placée sur le côté proximal de la zone superficielle (32.1, 32.2) distale de l'au moins une section de préhension (31.1, 31.2) distale respective, en partant chaque fois de la zone superficielle (32.1, 32.2) distale de l'au moins une section de préhension (31.1, 31.2) distale respective, dans la position de préhension des unités de préhension (30.1, 30.2), les zones superficielles (33.1, 33.2) proximales croissant en direction proximale en s'éloignant de la zone superficielle (32.1, 32.2) distale respective vers le haut.

7. Dispositif de transport (1, 50) selon l'une quelconque des revendications 1 à 6, **caractérisé en ce que** pour le réglage de la position de libération dans la position de préhension et en retour, les deux unités de préhension (30.1, 30.2) sont logées chacune en étant déplaçables le long d'une course de réglage.

8. Dispositif de transport (1, 50) selon la revendication 7, **caractérisé en ce que** les courses de réglage des deux unités de préhension (30.1, 30.2) comportent chacune une composante horizontale.

9. Dispositif de transport (1, 50) selon la revendication 7 ou 8, **caractérisé en ce que** chaque fois dans une zone de la course de réglage se raccordant directement sur la position de préhension, les courses de réglage des deux unités de préhension (30.1, 30.2) comportent une composante verticale, lors du réglage de la position de libération dans la position de préhension, du fait de la composante verticale des courses de réglage, les deux unités de préhension (30.1, 30.2) étant déplacées chacune vers le haut dans la position de préhension, pour relever le produit à transporter (100.1, 100.2, 100.3) vers le haut dans la configuration de chargement du système de levage (4), par réglage du système de préhension (3) de la configuration de libération dans la configuration de préhension, pour saisir le produit à transporter (100.1, 100.2, 100.3).

10. Dispositif de transport (1, 50) selon l'une quelconque des revendications 1 à 6, **caractérisé en ce que** pour le réglage de la position de libération dans la position de préhension et en retour, les unités de préhension (30.1, 30.2) sont susceptibles de pivoter chacune autour d'un axe (5.1, 5.2).

11. Dispositif de transport selon la revendication 10, **caractérisé en ce que** les axes (5.1, 5.2) sont orientés à la parallèle les uns aux autres.

12. Dispositif de transport selon la revendication 10 ou 11, **caractérisé en ce que** les axes (5.1, 5.2) sont orientés sensiblement à l'horizontale.

13. Dispositif de transport (1, 50) selon l'une quelconque des revendications 4 à 6, ainsi que selon la revendication 12, **caractérisé en ce que** pour le réglage des deux unités de préhension (30.1, 30.2) de la position de libération dans la position de préhension pour saisir le produit à transporter (100.1, 100.2, 100.3), les au moins une sections de préhension (31.1, 31.2) distales des unités de préhension (30.1, 30.2) sont susceptibles de pivoter autour des axes (5.1, 5.2), du bas vers le haut, jusqu'à ce que les unités de préhension (30.1, 30.2) se trouvent dans la position de préhension, pour relever le produit à transporter (100.1, 100.2, 100.3) vers le haut dans la configuration de chargement du système de levage (4), par réglage du système de préhension (3) de la configuration de libération dans la configuration de préhension, pour saisir le produit à transporter (100.1, 100.2, 100.3.

14. Dispositif de transport (50) selon l'une quelconque des revendications 1 à 13, **caractérisé en ce que** le dispositif de transport (50) comporte une barrière (51) pour protéger le produit à transporter (100.1, 100.2, 100.3) lors du transport du produit à transporter (100.1, 100.2, 100.3), dans une position active dans la configuration de transport du système de levage (4), lorsque le produit à transporter (100.1, 100.2, 100.3) est saisi par le système de préhension (3), la barrière (51) entourant le produit à transporter (100.1, 100.2, 100.3) sur les quatre côtés.

15. Dispositif de transport (50) selon la revendication 14, **caractérisé en ce qu'**en partant de sa position active, la barrière (51) est susceptible d'être pivotée en éloignement, en deux parties (52.1, 52.2) sur deux côtés opposés dans une position inactive, les deux parties (52.1, 52.2) étant susceptibles de pivoter chacune autour d'un axe de pivotement (53.1, 53.2), orienté de préférence à l'horizontale, les axes de pivotement (53.1, 53.2) orientés de préférence à l'horizontale étant placés notamment dans une zone supérieure de la barrière (51).

16. Dispositif de transport (1, 50) selon l'une quelconque des revendications 1 à 15, **caractérisé en ce que** le dispositif de transport (1, 50) est une remorque pour un véhicule motorisé ou un véhicule motorisé.
